# EUROPÄISCHE PATENTSCHRIFT

(11) **EP 4 225 581 B1**
(45) Veröffentlichungstag und Bekanntmachung des Hinweises auf die Patenterteilung: **01.05.2024**
(21) Anmeldenummer: 22714377.3
(22) Anmeldetag: 10.03.2022
(51) Int. Cl.: B33Y 10/00, B33Y 30/00, B22F 10/22, B22F 12/53, B33Y 50/02, B22F 10/31, B22F 9/08

(54) **DRUCKKOPF UND INBETRIEBNAHMEVERFAHREN FÜR EINEN DRUCKKOPF**
PRINT HEAD AND METHOD FOR STARTING UP A PRINT HEAD
TÊTE D'IMPRESSION ET PROCÉDÉ DE DÉMARRAGE D'UNE TÊTE D'IMPRESSION

(30) Priorität: 18.06.2021 DE 102021115821
(43) Veröffentlichungstag der Anmeldung: 16.08.2023
(73) Patentinhaber: Grob-Werke GmbH & Co. KG, 87719 Mindelheim (DE)
(72) Erfinder: GLASSCHRÖDER, Johannes, 86356 Neusäß (DE); HIMMEL, Benjamin, 81249 München (DE); LANG, Andreas, 86833 Ettringen (DE); LEUSCH, Oliver, 86159 Augsburg (DE); MIKLEC, Christian, 86825 Bad Wörishofen (DE); OTTER, Martin, 87700 Memmingen (DE)
(74) Vertreter: Wildschütte, Matthias Bernd
(86) Internationale Anmeldenummer: PCT/EP2022/056183
(87) Internationale Veröffentlichungsnummer: WO 2022/263023

(56) Entgegenhaltungen:
- WO-A1-2020/200908
- DE-A1-102018 216 930
- DE-A1-102019 204 566

## Beschreibung

Die Erfindung betrifft ein Verfahren zur Inbetriebnahme eines Düsenkanals eines Druckkopfes für die Verarbeitung flüssiger Metallschmelzen, wie in Anspruch 1 definiert.

Die Erfindung betrifft weiterhin einen Druckkopf zur Verarbeitung flüssiger Metallschmelzen mit einer Regeleinheit, welche dazu konfiguriert ist, das erfindungsgemäße Verfahren durchzuführen, wie in Anspruch 15 definiert.

Additive Fertigungsverfahren sind Fertigungsverfahren, bei denen Bauteile durch sequenzielles Hinzufügen kleiner Materialmengen nach und nach aufgebaut werden. Vorteilhaft an solchen additiven Fertigungsverfahren ist, dass zur Herstellung der Bauteile kein oder ein nur sehr geringer Aufwand für die Herstellung von Fertigungswerkzeugen entsteht. Darüber hinaus vermeidet man bei additiven Fertigungsverfahren, dass für die Formung eines Bauteils größere Mengen an Abfall oder Verschnitt, wie sie beispielsweise bei spanenden Fertigungsverfahren auftreten, anfallen. Weiterhin können durch additive Fertigung komplexe Formen, wie beispielsweise Hinterschneidungen, in einem Arbeitsgang erstellt werden, was mit anderen Verfahren der Urformung, Umformung oder Zerspanung nicht möglich ist. Additive Fertigungsverfahren eignen sich somit besonders für die schnelle und kostengünstige Herstellung von Prototypen und Kleinserienteilen. Additive Fertigungsverfahren sind seit längerem für Bauteile aus Kunststoff bekannt, beispielsweise in Form von 3D-Druckverfahren, durch die dreidimensionale, physikalische Bauteile basierend auf einem virtuellen Datenmodell hergestellt werden.

Inzwischen ist es auch möglich, Metallwerkstoffe in additiven Fertigungsverfahren zu verarbeiten und somit dreidimensionale, metallische Bauteile zu erzeugen. Metallische Bauteile können beispielsweise in einem Bett aus Metallpulver durch eine Strahlquelle, beispielsweise einen Laser, hergestellt werden. Das Metallpulver wird durch die Strahlquelle lokal geschmolzen und zu einem Festkörper verbunden. Solche Verfahren sind beispielsweise unter den Namen "Laser Powder Bed Fusion (LPBF)" bekannt. Auch Verfahren mit der Bezeichnung "Direct Energy Deposition (DED)" sind geeignet zur Herstellung von dreidimensionalen metallischen Bauteilen.

Weiterhin bekannt sind Verfahren, welche als "Material Jetting MJT" bezeichnet werden und bei denen flüssige Metallschmelze in Tropfenform dreidimensional zu Metallbauteilen zusammengefügt werden. Anlagen mit dieser komplexen Technologie sind noch kaum auf dem Markt verfügbar. Aktuell wird an der Weiterentwicklung zur Serienreife solcher Verfahren gearbeitet. Bei diesen Verfahren werden Druckköpfe eingesetzt, welche flüssiges Metall in Tropfenform ausgeben und ein metallisches Bauteil so schichtweise nach und nach erzeugen. Ein kritisches Bauteil solcher Druckköpfe ist die Düse, durch welche die flüssigen Metalltropfen ausgegeben werden. Bei einer solchen Düse ist zu vermeiden, dass flüssiges Metall im Ausgangsbereich der Düse anhaftet und diese ungewollt verändert oder verschließt. Eine solche Veränderung der Düse würde zu einem nicht reproduzierbaren Verhalten bei der Tropfenausgabe und somit zu einem nicht reproduzierbaren Druckergebnis führen, was in der Fertigung nicht erwünscht ist. Aus diesem Grund wurden Düsen entwickelt, welche metallophobe, also metallabweisende, Oberflächen aufweisen um ein Anhaften zu verhindern und die Tropfenablösung zu begünstigen. Wird jedoch die innere Oberfläche des Düsenkanals, durch welchen das flüssige Metall die Düse verlässt, ebenfalls metallophob gestaltet, entsteht dort oft keine reproduzierbare Benetzung durch das flüssige Metall, wodurch wiederum der Tropfenausstoß nicht reproduzierbar wird.

Dieser Zielkonflikt kann beispielsweise dadurch gelöst werden, dass ein Teil der Düse metallophob und ein anderer Teil, insbesondere das Innere des Düsenkanals, metallophil gestaltet werden. Eine solche bereichsweise unterschiedliche Oberflächengestaltung der Düse ist beispielsweise in DE 10 2018 221 752 A1 beschrieben. Nachteilig an dieser Lösung ist, dass zumindest in einem Teilbereich der Düse zusätzlich lokal begrenzt eine Beschichtung aufgebracht werden muss. Diese zusätzliche Beschichtung ist aufwendig und erhöht die Kosten für die Düse, welche als Verschleißteil in regelmäßigen Abständen ausgetauscht werden muss.

Weiterhin ist zur Verbesserung der Benetzung des Inneren des Düsenkanals ein Inbetriebnahmeverfahren für eine Düse bekannt, bei dem hochfrequente Schwingungen in das flüssige Metall eingekoppelt werden, um Luftblasen aus der Metallschmelze zu entfernen. Sind Luftblasen im Düsenkanal oder der Düsenkammer innerhalb der Metallschmelze enthalten, wirken diese beim Druck wie Luftfedern und erschweren den gezielten und reproduzierbaren Ausstoß von Tropfen. Eine derartige Lösung ist beispielsweise in WO 2020/200908 A1 offenbart. Nachteilig an diesem Inbetriebnahmeverfahren ist, dass durch die Entfernung der Luftblasen zwar effektiv die Benetzung im Düsenkanal oder der Düsenkammer verbessert wird, jedoch nur schwer zu bestimmen ist, ob und wann eine vollständige Benetzung im Düsenkanals stattgefunden hat. Trotz der Durchführung des bekannten Inbetriebnahmeverfahrens ist somit nicht sichergestellt, dass die Düse danach Tropfen des flüssigen Metalls in guter Qualität und reproduzierbar ausstößt.

Die Aufgabe der Erfindung besteht somit darin, Lösungen vorzuschlagen, mit denen ein metallophober Düsenkanal eines Druckkopfes für die Verarbeitung flüssiger Metallschmelzen einfacher auf seinen Einsatz zum qualitativ hochwertigen, reproduzierbaren Ausstoß von Metalltropfen vorbereitet werden kann.

Diese Aufgabe wird gelöst durch ein Verfahren zur Inbetriebnahme eines Düsenkanals eines Druckkopfes für die Verarbeitung flüssiger Metallschmelzen, wobei der Druckkopf folgende Komponenten umfasst:
- einen Tiegel zur Aufnahme eines zu druckenden Metalls,
- eine Heizeinrichtung zum Aufschmelzen des Metalls,
- eine Düse, welche mit dem Tiegel verbunden ist und welche eine Düsenkammer und einen Düsenkanal, welcher sich entlang einer Ausstoßrichtung erstreckt, aufweist, wobei die Düsenkammer und der Düsenkanal ineinander übergehen,
- einen Aktuator, welcher einen Kolben mit einer Kolbenspitze, welche in die Düsenkammer einbringbar ist, aufweist, wobei der Aktuator dazu ausgelegt ist, den Kolben linear vor und zurück zu bewegen, insbesondere in einer Richtung parallel zur Ausstoßrichtung,
wobei das Verfahren folgende Schritte umfasst:
A) Vorbereitung des Druckkopfes, wobei im Tiegel Metall zu einer Metallschmelze aufgeschmolzen wird und die Kolbenspitze in die Düsenkammer eingeführt wird, wobei zwischen der Kolbenspitze und der Düsenkammer im eingeführten Zustand in radialer Richtung zur Ausstoßrichtung zumindest bereichsweise ein Abstand besteht,
B) Erzeugung eines Überdrucks im Inneren des Tiegels, wodurch gefördert wird, dass Metallschmelze in die Düsenkammer eindringt,
C) Bewegung der Kolbenspitze in der Düsenkammer, wobei die Kolbenspitze durch den Aktuator mit einer Füllfrequenz von größer oder gleich 1 kHz vor und zurück bewegt wird, solange, bis Metallschmelze aus dem Düsenkanal aus dem Druckkopf ausgestoßen wird,
D) Bewegung der Kolbenspitze in der Düsenkammer, wobei die Kolbenspitze durch den Aktuator vor und zurück bewegt wird, wobei die Bewegung zuerst mit einer Startamplitude durchgeführt, bei der Metallschmelze aus dem Düsenkanal aus dem Druckkopf ausgestoßen wird und im weiteren Verlauf die Amplitude der Bewegung stufenweise reduziert wird und wobei die Bewegung solange mit stufenweiser Reduzierung der Amplitude durchgeführt wird, bis keine Metallschmelze aus dem Düsenkanal aus dem Druckkopf mehr ausgestoßen wird, wobei die Amplitude bei der gerade noch Metallschmelze aus dem Düsenkanal aus dem Druckkopf ausgestoßen wird als Grenzamplitude definiert wird,
E) Wiederholung von Verfahrensschritt D) n Mal hintereinander, wobei bei jeder der n Wiederholungen von Verfahrensschritt D) in Verfahrensschritt D) die Grenzamplitude ermittelt wird,
F) Beendigung des Verfahrens zur Inbetriebnahme eines Düsenkanals sobald die ermittelten Grenzamplituden bei n + 1 Wiederholungen des Verfahrensschrittes D) alle gleich oder kleiner als eine definierte Grenzamplitude sind.

Das erfindungsgemäße Verfahren wird durchgeführt, um einen Düsenkanal eines Druckkopfes in Betrieb zu nehmen. Bevorzugt wird das erfindungsgemäße Verfahren initial einmalig durchgeführt, um einen bisher nicht benetzten Düsenkanal in Betrieb zu nehmen. Alternativ ist es möglich, dass erfindungsgemäße Verfahren bei Störungen während der additiven Fertigung auch bei einem Düsenkanal einzusetzen, welcher bereits in Betrieb war. Bevorzugt wird das erfindungsgemäße Verfahren in der angegebenen zeitlichen Abfolge der Verfahrensschritte A) bis F) durchgeführt. Die Reihenfolge der Durchführung der Verfahrensschritte kann jedoch auch zumindest teilweise vertauscht oder geändert werden.

Zunächst werden die Komponenten oder Elemente eines Druckkopfes beschrieben, welcher mithilfe des erfindungsgemäßen Verfahrens in Betrieb genommen wird. Der Druckkopf umfasst einen Tiegel, welcher das zu druckende Metall für die additive Fertigung aufnimmt. Der Tiegel ist hitzefest ausgeführt, so dass er auch flüssige Metallschmelze mit hoher Temperatur dauerhaft aufnehmen kann. Angrenzend oder verbunden mit dem Tiegel ist eine Heizeinrichtung vorgesehen, welche zum Aufschmelzen des Metalls oder zumindest zum Aufrechterhalten eines geschmolzenen Zustandes vorgesehen ist. Die Heizeinrichtung kann beispielsweise als Widerstandsheizung oder als Induktionsheizung ausgeführt sein. Der Druckkopf weist weiterhin eine Düse auf, welche mit dem Tiegel verbunden ist. Die Düse stellt eine Baugruppe dar, aus der flüssige Metallschmelze bei der additiven Fertigung ausgestoßen wird. Die Düse kann teilweise durch Bereiche des Tiegels gebildet werden oder als separate Baugruppe, die in den Tiegel eingesetzt ist, vorgesehen sein. Die Ausstoßrichtung ist als diejenige Richtung definiert, in welche flüssige Metallschmelze beim Betrieb des Druckkopfes ausgestoßen wird. Die Düse weist eine Düsenkammer und, angrenzend an die Düsenkammer, zumindest einen Düsenkanal auf. Sowohl die Düsenkammer als auch der Düsenkanal erstrecken sich entlang der Ausstoßrichtung. Die Düsenkammer ist auf der zum Innenraum des Tiegels gewandten Seite der Düse angeordnet, der Düsenkanal ist auf der dem Innenraum des Tiegels abgewandten Seite der Düsenkammer angeordnet und bildet einen Austrittsbereich für Metallschmelze aus der Düse. Die Düsenkammer und der Düsenkanal gehen ineinander über und sind fluidisch miteinander verbunden. Der Innenquerschnitt senkrecht zur Ausstoßrichtung der Düsenkammer ist größer als der entsprechende Innenquerschnitt des Düsenkanals. Der Druckkopf umfasst weiterhin einen Aktuator, welcher diejenige Baugruppe bildet, die durch Umsetzung von Energie den Ausstoß flüssiger Metallschmelze aus der Düse bewirkt. Der Aktuator ist mit einem Kolben verbunden. Die Bewegungsrichtung des Aktuators und die Längsachse des Kolbens erstrecken sich in Richtung oder parallel zur Ausstoßrichtung. Der Kolben weist an seiner der Verbindung mit dem Aktuator gegenüberliegenden Seite eine Kolbenspitze auf, welche in die Düsenkammer einbringbar ist. Der Aktuator ist ein linearer Aktuator, das bedeutet, dass er dazu vorgesehen ist, den Kolben linear vor und zurück zu bewegen.

Das erfindungsgemäße Verfahren umfasst folgende Schritte: In einem ersten Verfahrensschritt A) wird der Druckkopf vorbereitet. Dazu wird im Inneren des Tiegels das zu druckende Metall zu einer Schmelze aufgeschmolzen. Dazu kann als Feststoff in den Tiegel eingebrachtes Metall durch die Heizeinrichtung im Tiegel aufgeschmolzen werden. Alternativ kann zumindest ein Teil der Metallschmelze auch in bereits flüssigem Zustand von außen dem Tiegel zugeführt werden. Der Tiegel kann auch zunächst durch die Heizeinrichtung aufgewärmt werden, bevor Metall in den Tiegel eingebracht wird. Sobald flüssige Metallschmelze im Tiegel vorliegt, fließt bereits ein Teil der Metallschmelze zur Verbindung des Inneren des Tiegels mit der Düsenkammer. Bevorzugt ist die Düsenkammer in einem unteren Bereich des Tiegels mit dessen Innenraum verbunden, so dass die Metallschmelze durch die Schwerkraft zur und auch bereichsweise in die Düsenkammer bewegt wird. Bevorzugt wird die Kolbenspitze des Kolbens in die Düsenkammer eingeführt, nachdem bereits flüssige Metallschmelze im Tiegel vorliegt. Dieses initiale Einbringen der Kolbenspitze fördert das Eindringen der Metallschmelze in die Düsenkammer, indem die Kolbenspitze flüssige Metallschmelze mit sich zieht. Alternativ kann die Kolbenspitze jedoch auch vor dem Einbringen von Metall in den Tiegel in die Düsenkammer eingeführt werden. In einem Zustand, in dem die Kolbenspitze in die Düsenkammer eingebracht ist, besteht zumindest bereichsweise ein Abstand zwischen der Innenwand der Düsenkammer und der äußeren Oberfläche der Kolbenspitze. Dieser Abstand kann sich beispielsweise in einer Richtung radial zur Ausstoßrichtung erstrecken. Durch diesen Abstand ist sichergestellt, dass sich flüssige Metallschmelze an der Kolbenspitze vorbei in die Düsenkammer und in Richtung Düsenkanal bewegen kann. Dieses Nachführen von flüssiger Metallschmelze in Richtung Düsenkanal ist wichtig, um eine komplette Befüllung des Inneren der Düsenkammer und des Düsenkanals zu erreichen.

In einem zweiten Verfahrensschritt B) wird ein Überdruck im Inneren des Tiegels erzeugt. Durch diesen Überdruck wird das weitere Eindringen der flüssigen Metallschmelze in die Düsenkammer und den Düsenkanal gefördert. Da die Oberflächen der Düsenkammer und des Düsenkanals metallophob sind, ist für die Herbeiführung einer Benetzung dieser Oberflächen die Oberflächenspannung der Metallschmelze zu überwinden, was zumindest teilweise durch einen treibenden Überdruck im Inneren des Tiegels erfolgt. Die Höhe des Überdrucks richtet sich nach der geometrischen Beschaffenheit von Tiegel und Düse. Es ist auch denkbar, einen sehr geringen oder gar keinen Überdruck anzulegen, sofern ein Eindringen der flüssigen Metallschmelze in die Düse bereits getrieben durch die Schwerkraft in ausreichendem Maße gegeben ist.

In einem dritten Verfahrensschritt C) wird die Kolbenspitze in der Düsenkammer mit einer Füllfrequenz vor und zurück bewegt. Die Füllfrequenz ist signifikant größer als die Frequenz, mit der im Betrieb des Druckkopfes flüssige Metallschmelze in Tropfenform ausgegeben wird. Die Füllfrequenz ist bevorzugt größer als 1 kHz und kann beispielsweise 4 kHz betragen. Es können aber auch noch höhere Füllfrequenzen, beispielsweise größer als 20 kHz verwendet werden. Die Vor- und Zurückbewegung der Kolbenspitze wird durch den Aktuator bewirkt, welcher dementsprechend angesteuert wird. Die Amplitude der Kolbenspitze in Verfahrensschritt C) ist dabei bevorzugt größer als die Startamplitude in Verfahrensschritt D), welche weiter unten beschrieben wird. Die Amplitude der Kolbenspitze in Verfahrensschritt C) ist bevorzugt auch größer als die Amplitude, mit der die Kolbenspitze in einem Betriebsmodus bewegt wird, in welchem der Druckkopf Metallschmelze tropfenweise ausstößt, um ein Bauteil zu formen. In diesem Betriebsmodus kann die Amplitude der Kolbenspitze größer als die Startamplitude in Verfahrensschritt D) sein.

Durch die hochfrequente Bewegung der Kolbenspitze im Inneren des Düsenkanals wird die flüssige Metallschmelze in Schwingungen versetzt, welche wiederum dazu führen, dass sich Luftblasen, welche sich in der Metallschmelze oder im Grenzbereich zwischen Metallschmelze und der Wand des Düsenkanals befinden, auflösen. Sind Luftblasen in der Metallschmelze vorhanden, wirken diese wie Luftfedern und dämpfen im Betrieb des Druckkopfes die Übertragung von Energie zwischen Kolbenspitze und Metallschmelze. Aus diesem Grund führen Luftblasen in der Metallschmelze zu nicht reproduzierbaren Druckergebnissen und erschweren zudem die initiale Benetzung von Düsenkammer und Düsenkanal. Indem die Metallschmelze durch die Kolbenspitze in Schwingung versetzt wird, lösen sich die Luftblasen auf, was wiederum zu einem verbesserten Energieübertrag zwischen Kolbenspitze und Metallschmelze führt. Dadurch wird die Metallschmelze sukzessive in das Innere der Düsenkammer und auch des Düsenkanals hinein bewegt, was zu einer zumindest bereichsweisen Benetzung der metallophoben Oberflächen führt. Somit wird bereits in Verfahrensschritt C) durch die hochfrequente Bewegung der Kolbenspitze erreicht, dass flüssige Metallschmelze durch den gesamten Düsenkanal hindurch bewegt wird und aus dem Druckkopf ausgestoßen wird. In Verfahrensschritt C) kann der Fall eintreten, dass die Düsenkammer und/oder der Düsenkanal noch nicht komplett mit Metallschmelze gefüllt ist und bei einer Bewegung der Kolbenspitze trotzdem flüssige Metallschmelze ausgestoßen wird. In diesem Fall kann beispielsweise nur ein zur Düsenkammer hin gewandter Bereich des Düsenkanals mit Schmelze gefüllt sein. Die Schmelze bildet dann im Grenzbereich zwischen dem gefüllten Bereich und dem noch nicht gefüllten Bereich des Düsenkanals einen Meniskus, welcher den Querschnitt des Düsenkanals überspannt. In Verfahrensschritt C) kann somit noch nicht sicher festgestellt werden, ob tatsächlich die gesamte innere Oberfläche des Düsenkanals benetzt ist und ob eine Tropfenausgabe bereits reproduzierbar ist.

In einem vierten Verfahrensschritt D), welcher nach einem Ausstoß von flüssiger Metallschmelze in Verfahrensschritt C) gestartet wird, wird die Kolbenspitze mit kleiner werdender Amplitude in der Düsenkammer bewegt. Auch im Verfahrensschritt D) erfolgt die lineare Vor- und Zurückbewegung der Kolbenspitze durch den Aktuator, welcher entsprechend angesteuert wird. In Verfahrensschritt D) wird zunächst die Kolbenspitze mit einer Startamplitude bewegt. Unter Amplitude kann dabei auch die Länge des Hubes der Kolbenspitze verstanden werden. Letztlich bewirkt die Amplitude der Kolbenspitze eine Verkleinerung des Volumens, welches für die Metallschmelze in der Düsenkammer vorhanden ist. Die Amplitude der Kolbenspitze ist somit direkt proportional zu der Änderung des Volumens der flüssigen Metallschmelze in der Düsenkammer. Die Stadtamplitude wird so gewählt, dass sie groß genug ist, um sicher einen Ausstoß von Metallschmelze aus der Düse zu erreichen. Die Startamplitude stellt die maximale Amplitude während der Durchführung des erfindungsgemäßen Verfahrens dar. Bevorzugt ist der Aktuator so ausgelegt, dass dieser in der Lage ist, noch größere Amplituden als die Startamplitude zu erzeugen. Die Startamplitude ist somit bevorzugt kleiner als die maximale durch den Aktuator erzeugbare Amplitude. Die Größe der gewählten Startamplitude kann beispielsweise durch vorhergehende Versuche empirisch ermittelt werden. Bevorzugt wird die Kolbenspitze in Verfahrensschritt D), zumindest bei einer Bewegung mit der Startamplitude deutlich stärker beschleunigt als im Betriebsmodus zur Erzeugung von Bauteilen. Im folgenden Verlauf von Verfahrensschritt D) wird die Amplitude der Kolbenspitze nach und nach reduziert. Bei jeder Reduktion wird geprüft, ob Metallschmelze aus dem Düsenkanal ausgestoßen wird oder nicht. Für diese Überprüfung, ob Metallschmelze ausgestoßen wird, kann eine entsprechende technische Ausstoßerkennungsvorrichtung am oder in der Nähe des Druckkopfes vorgesehen werden. Die Reduktion der Amplitude der Kolbenspitze und die Prüfung des Ausstoßes von Metallschmelze für jede der Amplituden werden solange fortgesetzt, bis bei einer eingestellten Amplitude kein Ausstoß von Metallschmelze aus der Düse mehr feststellbar ist. Diejenige Amplitude, bei welcher gerade noch Metallschmelze ausgestoßen wird, wird als Grenzamplitude definiert. Bevorzugt ist diese Grenzamplitude diejenige Amplitude, welche vor dem Schritt eingestellt war, in dem keine Metallschmelze mehr ausgestoßen wird.

In einem fünften Verfahrensschritt E) erfolgt eine Wiederholung des zuvor durchgeführten Verfahrensschritts D). Es wird erneut Verfahrensschritt D) durchgeführt, wobei wiederum die Kolbenspitze zunächst mit der Startamplitude bewegt wird und anschließend die Amplitude wiederum solange reduziert wird, bis kein Ausstoß von Metallschmelze aus der Düse mehr erfolgt. Auch bei der Wiederholung wird wie zuvor beschrieben die Grenzamplitude bestimmt. Die bei der Wiederholung bestimmte Grenzamplitude wird anschließend mit der erstmalig ermittelten Grenzamplitude und/oder mit den bei vorherigen Wiederholungen bestimmten Grenzamplituden verglichen. Der Vergleich der Grenzamplituden erlaubt einen Rückschluss auf den Benetzungsgrad der inneren Oberflächen des Düsenkanals. Unterscheiden sich die ermittelten Grenzamplituden signifikant voneinander, kann davon ausgegangen werden, dass der Düsenkanal bereichsweise noch nicht durch die Metallschmelze benetzt ist. Andersherum kann bei Grenzamplituden, welche eine geringe Streuung aufweisen und nahe beieinander liegen, davon ausgegangen werden, dass eine komplette Benetzung des Inneren des Düsenkanals bereits stattgefunden hat und dieser bereit ist für eine reproduzierbare Erzeugung von Bauteilen. Die Wiederholung des Verfahrensschrittes D) wird n mal durchgeführt. Bei einem neuen oder bisher wenig erforschten Typ von Düse wird n bevorzugt im Bereich von 1 bis 5 gewählt, um eine hohe Sicherheit bezüglich der Feststellung der Benetzung zu erreichen. In Fällen, in denen technische Probleme auftreten, kann n auch größer als 5 gewählt werden. Für einen Düsentyp oder einen Typ eines Düsenkanals der bereits gut untersucht wurde und zu dem bereits eine Vielzahl an ermittelten Grenzamplituden vorliegt, kann n auch gleich null gewählt werden und somit der komplette Verfahrensschritt E) weggelassen werden. In diesem Fall kann anhand der Größe der ermittelten Grenzamplitude bei nur einmaligem Durchlaufen Verfahrensschritt D) mit ausreichender Sicherheit ausgesagt werden, dass eine komplette Benetzung des Düsenkanals bereits stattgefunden hat. Bevorzugt wird jedoch n zumindest gleich 1 gewählt und der Verfahrensschritt E) zumindest einmal durchgeführt, um zumindest zwei ermittelte Grenzamplituden miteinander vergleichen zu können.

Das erfindungsgemäße Verfahren wird in einem sechsten Verfahrensschritt F) beendet, sobald alle ermittelten Grenzamplituden aus den vorhergehenden Verfahrensschritten D) und E) gleich groß oder kleiner als eine definierte Grenzamplitude sind. Unter dieser definierten Grenzamplitude ist ein zuvor empirisch ermittelter Grenzwert zu verstehen, welcher eine Amplitude darstellt, bei der bei vollständiger Benetzung des Düsenkanals ein Ausstoß von Metallschmelze aus der Düse erfolgen muss. Ist eine im Inbetriebnahmeverfahren ermittelte Grenzamplitude größer als diese definierte Grenzamplitude, so bedeutet das, dass die Benetzung des Düsenkanals voraussichtlich unzureichend ist. In diesem Fall wird das erfindungsgemäße Inbetriebnahmeverfahren fortgesetzt, um durch die wiederholte Durchführung des Verfahrensschrittes D) Metallschmelze durch größere Amplituden und Beschleunigung als bei der Herstellung von Bauteilen, in den Düsenkanal hineinzutreiben und dadurch eine weitere Benetzung zu bewirken. Der tatsächliche Abschluss des Verfahrens kann von unterschiedlichen Kriterien abhängig gemacht werden. Beispielsweise kann ein solches Kriterium sein, dass die ermittelten Grenzamplituden n + 1 Mal in Folge niedriger als oder gleich die definierte Grenzamplitude sein müssen. Dieses Kriterium ist beispielsweise nicht erfüllt, wenn die ermittelten Grenzamplituden zweimal kleiner und ein drittes Mal größer als die definierte Grenzamplitude ist. In diesem Fall muss das Verfahren mit Wiederholungen des Verfahrensschrittes E) solange fortgesetzt werden, bis alle n + 1 Wiederholungen in Folge kleiner als oder gleich die definierte Grenzamplitude sind. Alternative oder zusätzliche Kriterien zum Abschluss des Verfahrens können beispielsweise auch auf der Ermittlung einer Streuung in den Grenzamplituden beruhen, wobei die ermittelte Streuung mit einer maximal zulässigen Streuung verglichen wird.

Das erfindungsgemäße Verfahren zur Inbetriebnahme des Düsenkanals eines Druckkopfes ist in einfacher Weise durchführbar, da zur Durchführung des Verfahrens die gleichen Komponenten und Steuerelemente verwendet werden, wie bei der Herstellung von Bauteilen durch den Druckkopf. Durch das erfindungsgemäße Verfahren kann ein kostengünstig hergestellter, komplett metallophober Düsenkanal so auf den Betrieb zur Herstellung von Bauteilen vorbereitet werden, dass ein qualitativ hochwertiger, reproduzierbarer Ausstoß von flüssiger Metallschmelze aus dem Druckkopf möglich ist. Zudem ist das erfindungsgemäße Verfahren zur Inbetriebnahme in einfacher Weise an den Entwicklungsstand und die vorhandenen Kenntnisse zu einem Düsenkanal anpassbar. Durch eine Variation der Anzahl der Wiederholungen n des Verfahrensschrittes D) kann das Verfahren mit wenig Aufwand variiert und angepasst werden. Nach der Durchführung des erfindungsgemäßen Inbetriebnahmeverfahrens kann unter Verwendung des danach vollständig benetzen Düsenkanals eine Serienfertigung von Bauteilen reproduzierbar durchgeführt werden. Die Serienproduktion ist zudem kostengünstig, da einfache Ersatzteile, insbesondere Ersatzteile die den Düsenkanal umfassen, verwendet werden können. Darüber hinaus kann das erfindungsgemäße Verfahren in einfacher Weise auch automatisiert durchgeführt werden. Es kann eine Regeleinheit oder Steuerung vorgesehen werden, welche die Verfahrensschritte automatisch durchführt und die ermittelten Werte, insbesondere die Grenzamplituden, speichert und statistisch auswertet. Auf diese Weise können auch die Ergebnisse des erfindungsgemäßen Verfahrens prozesstechnisch sicher archiviert und dokumentiert werden. Weiterhin kann das erfindungsgemäße Verfahren in einfacher Weise auch an andere Bauformen eines Druckkopfes angepasst werden. Das Prinzip des erfindungsgemäßen Verfahrens lässt sich in gleicher Weise auch auf größere oder kleinere Druckköpfe übertragen und ist somit hilfreich bei der Neuentwicklung verschiedener additiv arbeitender Fertigungsanlagen.

In einer Ausführungsform ist vorgesehen, dass zwischen den Verfahrensschritten B) und C) in einem Verfahrensschritt B1) die Kolbenspitze im Inneren der Düsenkammer vor und zurück bewegt wird, wobei die Amplitude dieser Bewegung zumindest um den Faktor 10 größer als die Startamplitude ist. In dieser Ausführungsform umfasst das Verfahren einen weiteren Verfahrensschritt, welcher dazu beiträgt, die innere Oberfläche der Düsenkammer und des Düsenkanals zu benetzen. In diesem zusätzlichen Verfahrensschritt B1) wird die Kolbenspitze mit einer Amplitude in der Düsenkammer vor und zurück bewegt, welche signifikant größer als die Startamplitude und die Amplitude ist, mit welcher die Kolbenspitze im Betrieb des Druckkopfes bei der Herstellung von Bauteilen bewegt wird. Die Kolbenspitze wird in Verfahrensschritt B1) beispielsweise zumindest um ein Drittel der Länge der Düsenkammer parallel zur Ausstoßrichtung bewegt. Es ist auch möglich, die Kolbenspitze um die Hälfte oder mehr als die Hälfte der Länge der Düsenkammer zu bewegen. Ebenfalls möglich ist es, die Kolbenspitze ganz aus der Düsenkammer herauszuziehen und anschließend wieder in die Düsenkammer einzuführen. Die Amplitude, mit der die Kolbenspitze in Verfahrensschritt B1) bewegt wird, kann beispielsweise 15 mm betragen. Durch diese Bewegung der Kolbenspitze mit großer Amplitude wird Metallschmelze in die Düsenkammer und in Richtung des Düsenkanals bewegt. Die Kolbenspitze zieht bei ihrer Bewegung flüssige Metallschmelze mit sich, welche bei der Bewegung gegen die Innenwand der Düsenkammer gedrückt wird. Bevorzugt wird in Verfahrensschritt B1) die Kolbenspitze mit höherer Geschwindigkeit in die Düsenkammer hineinbewegt und mit niedrigerer Geschwindigkeit wieder aus der Düsenkammer herausgezogen. Eine geeignete Geschwindigkeit beim Hineinbewegen der Kolbenspitze in die Düsenkammer ist beispielsweise 15 mm/s. Eine geeignete Geschwindigkeit beim Herausziehen der Kolbenspitze in die Düsenkammer ist beispielsweise 5 mm/s. Durch die höhere Geschwindigkeit beim Hineinbewegen der Kolbenspitze in die Düsenkammer wird flüssige Metallschmelze in die Düsenkammer und den Düsenkanal hineingedrückt, da aufgrund der höheren Geschwindigkeit die Schmelze nur in geringem Maß durch den Abstand zwischen Kolbenspitze und Düsenkammer ausweichen kann. Beim Herausziehen wird die Kolbenspitze mit niedriger Geschwindigkeit bewegt, um zu vermeiden dass die Kolbenspitze flüssige Metallschmelze in signifikanter Menge wieder aus der Düsenkammer herauszieht, was einer guten Benetzung von Düsenkammer und Düsenkanal entgegenwirken würde. Bei der niedrigeren Geschwindigkeit beim Herausziehen kann oberhalb der Kolbenspitze befindliche Schmelze durch den Abstand zwischen Kolbenspitze und Düsenkammerwand vorbei fließen und wird nicht aus der Düsenkammer gezogen. Dadurch wird die Benetzung der Innenwand der Düsenkammer gefördert. Zusätzlich drückt die Kolbenspitze bei ihrer Bewegung in Richtung Düsenkanal flüssige Metallschmelze in den Düsenkanal, was dessen Benetzung fördert. Bevorzugt verbleibt in Verfahrensschritt B1) stets zumindest ein Teil der Kolbenspitze innerhalb der Düsenkammer. Die Kolbenspitze wird nicht komplett aus der Düsenkammer herausgezogen, da bei einem solchen kompletten Herausziehen bereits in den Düsenkanal eingedrungene Metallschmelze durch angesaugte Luft verdrängt werden könnte, welche durch die der Düsenkammer abgewandte Ausstoßöffnung des Düsenkanals eintritt, um das beim einem Herausziehen der Kolbenspitze aus der Düsenkammer entstandene, leere Volumen auszugleichen. Bevorzugt ist ein Verfahrensschritt B1) die Amplitude der Kolbenspitze deutlich größer als die Startamplitude. Somit ist es auch möglich, dass die Amplitude in Verfahrensschritt B) um einen Faktor von 100 oder 1000 größer als die Startamplitude ist. Zur Bewegung der Kolbenspitze mit einer derart großen Amplitude kann zusätzlich zum Aktuator eine andere Bewegungsvorrichtung vorgesehen sein, welche die Kolbenspitze mit einer derart großen Amplitude bewegt.

Des Weiteren ist günstiger Weise vorgesehen, dass in einem Fall, in dem nach einer vorbestimmten Verweilzeit in Verfahrensschritt C) keine Metallschmelze ausgestoßen wird, der Verfahrensschritt B1) der zuvor beschriebenen Ausführungsform wiederholt wird. In dieser Ausführungsform ist eine Wiederholung des zuvor beschriebenen Verfahrensschrittes B1) vorgesehen, sofern in Verfahrensschritt C) kein Ausstoß von flüssiger Metallschmelze aus dem Düsenkanal erreicht wird. Es kann vorkommen, dass es durch die hochfrequente Bewegung der Kolbenspitze in der Düsenkammer in Verfahrensschritt C), welche mit einer deutlich geringeren Amplitude als die langsamere Vor- und Zurückbewegung in Verfahrensschritt B1) durchgeführt wird, nicht zu einem Ausstoß von Metallschmelze kommt. Dies kann beispielsweise dann passieren, wenn sehr wenig Metallschmelze zu diesem Zeitpunkt in den Düsenkanal transportiert wurde. In diesem Fall wird der Verfahrensschritt B1) wiederholt, um eine größere Menge flüssiger Metallschmelze in den Düsenkanal zu befördern. Um eine größere Menge Material nachzufördern, ist eine langsame Bewegung der Kolbenspitze mit großer Amplitude in Verfahrensschritt B1) geeigneter als die hochfrequente Bewegung mit niedrigerer Amplitude in Verfahrensschritt C). In einer weiteren alternativen Ausführungsform des Verfahrens kann in einem ersten Durchlauf der Verfahrensschritt B1) auch weggelassen werden und die Verfahrensschritte B) und C) direkt hintereinander durchgeführt werden. Wird in diesem Fall dann in Verfahrensschritt C) keine Metallschmelze ausgestoßen, wird anschließend an Verfahrensschritt C) erstmalig der Verfahrensschritt B1) durchgeführt um eine größere Menge an Metallschmelze in den Düsenkanal und die Düsenkammer zu befördern. Ein Wiederholungszyklus aus den Verfahrensschritten B1) und C) wird solange wiederholt, bis in Verfahrensschritt C) Metallschmelze aus dem Düsenkanal ausgestoßen wird.

In einer weiteren Ausführungsform ist vorgesehen, dass zwischen den Verfahrensschritten C) und D) ein Verfahrensschritt C1) durchgeführt wird, in dem der Überdruck im Inneren des Tiegels reduziert wird. In Verfahrensschritt B) wird im Inneren des Tiegels ein Überdruck erzeugt, welcher fördert, dass Metallschmelze getrieben durch diesen Überdruck in den Düsenkanal eindringt. Dieser in Verfahrensschritt B) erzeugte Überdruck kann vor dem Beginn von Verfahrensschritt C) reduziert werden. Diese Reduzierung des Überdrucks kann so durchgeführt werden, dass der Druck im Tiegel so eingestellt wird, wie er im Betrieb des Druckkopfes zur Erzeugung von Bauteilen eingestellt ist. Durch eine solche Reduzierung des Überdrucks im Tiegel wird die Übertragbarkeit der in Verfahrensschritt D) ermittelten Grenzamplitude auf den Betrieb des Druckkopfes zur Erzeugung von Bauteilen verbessert und deren Aussagekraft erhöht.

Vorteilhafterweise ist vorgesehen, dass in Verfahrensschritt E) die n Wiederholungen des Verfahrensschrittes D) mit dem nach Verfahrensschritt C1) reduzierten Überdruck im Inneren des Tiegels durchgeführt werden. In dieser Ausführungsform werden die n Wiederholungen in Verfahrensschritt E) ebenfalls mit einem gegenüber Verfahrensschritt B) reduzierten Überdruck im Inneren des Tiegels durchgeführt. Durch den reduzierten Überdruck nach Verfahrensschritt C1) wird Verfahrensschritt E) in dieser Ausführungsform unter Druckbedingungen im Inneren des Tiegels durchgeführt, welche im Wesentlichen den Druckbedingungen bei der Erzeugung von Bauteilen durch den Druckkopf entspricht. Die ermittelten Grenzamplituden lassen somit einen direkten Rückschluss auf die Grenzamplituden im normalen Druckbetrieb zu. Somit liefert das Verfahren in dieser Ausführungsform besonders aussagekräftige reproduzierbare Ergebnisse zu den Grenzamplituden.

In einer vorteilhaften Ausgestaltung ist vorgesehen, dass in einem Fall, in dem in Verfahrensschritt D) bei einer Bewegung der Kolbenspitze keine Metallschmelze aus dem Düsenkanal aus dem Druckkopf ausgestoßen wird, ein Verfahrensschritt C2) durchgeführt wird, wobei der Verfahrensschritt C2) dem Verfahrensschritt C) entspricht, welcher mit reduziertem Überdruck im Inneren des Tiegels gemäß Verfahrensschritt C1) durchgeführt wird, und nach dem Verfahrensschritt C2) Verfahrensschritt D) wiederholt wird. Es kann vorkommen, dass während des Inbetriebnahmeverfahrens in Verfahrensschritt D) bei einer eingestellten Startamplitude kein Ausstoß von Metallschmelze aus dem Düsenkanal erfolgt. Grund dafür kann beispielsweise eine unzureichende Füllung des Düsenkanals mit flüssiger Metallschmelze vor dem Beginn von Verfahrensschritt D) sein. In diesem Fall ist es möglich, die Startamplitude zu erhöhen, solange bis ein Ausstoß von Metallschmelze erfolgt. Die Startamplitude ist jedoch so gewählt, dass bei ausreichender Füllung der Düsenkammer und des Düsenkanals mit Metallschmelze ein Ausstoß von Metallschmelze erfolgen sollte. Eine weitere Ursache dafür, dass in Verfahrensschritt D) bei der Startamplitude kein Material ausgestoßen wird, kann das Vorhandensein von Luftblasen in der Metallschmelze sein, welche im vorhergehenden Verfahrensschritt C) nicht entfernt wurden. Aus diesem Grund wird in einem Fall, in dem in Verfahrensschritt D) bei einer vorher bestimmten Startamplitude keine Metallschmelze ausgestoßen wird, ein zusätzlicher Verfahrensschritt C2) durchgeführt, bei dem die Kolbenspitze, wie in Verfahrensschritt C), mit hoher Frequenz bewegt wird, um durch Schwingungen in der Schmelze möglicherweise verbleibende Luftblasen zu entfernen. Der Verfahrensschritt C2) wird hier jedoch bevorzugt mit gegenüber Verfahrensschritt B) reduziertem Überdruck im Tiegel durchgeführt. Nach der Durchführung von Verfahrensschritt C2), welcher beendet wird, sobald Metallschmelze aus dem Düsenkanal ausgestoßen wird, wird dann erneut Verfahrensschritt D) ausgeführt. Auch dieser Zyklus kann so lange wiederholt werden, bis es zu einem Austritt von Metallschmelze bei einer Bewegung der Kolbenspitze mit der Startamplitude in Verfahrensschritt D) kommt.

Des Weiteren ist vorgesehen, dass die Bewegung der Kolbenspitze in Verfahrensschritt D) mit einer Inbetriebnahmefrequenz durchgeführt wird, welche höchstens 10 % der minimalen Füllfrequenz aus Verfahrensschritt C) beträgt. In dieser Ausführungsform erfolgt die Bewegung der Kolbenspitze in Verfahrensschritt D) signifikant langsamer als die Bewegung der Kolbenspitze in Verfahrensschritt C). In Verfahrensschritt C) wird die Kolbenspitze bewusst hochfrequent bewegt, um Luftblasen in der Metallschmelze aufzulösen. Auch in Verfahrensschritt C) wird durch die hochfrequente Bewegung Metallschmelze aus dem Düsenkanal ausgestoßen. Dieses Ausstoßen erfolgt in kleinen Tropfen, welche unregelmäßige Flugbahnen aufweisen und sich nicht ausschließlich entlang der Ausstoßrichtung bewegen. Ein derartiges ausstoßen kleiner Tropfen von Metallschmelze mit unterschiedlichen Flugrichtungen wird als "Spray" bezeichnet. Die unterschiedlichen Flugrichtungen der kleinen Tropfen treten auf, wenn die Innenwand des Düsenkanals noch nicht vollständig benetzt ist und/oder der Düsenkanal noch nicht komplett mit Metallschmelze gefüllt ist. Nachteilig an dem Auftreten von Spray ist, dass einige der Tropfen durch eine Flugbahn unterschiedlich zur Ausstoßrichtung Teile der Düse verschmutzen können, was wiederum später zu nicht reproduzierbaren Druckergebnissen führen kann. Um das Entstehen von unerwünschtem Spray in Verfahrensschritt D) zu vermeiden, wird eine Inbetriebnahmefrequenz gewählt, welche höchstens 10 % der Füllfrequenz beträgt. Auch bei Frequenzen der Kolbenspitze, welche zwischen der Füllfrequenz in Verfahrensschritt C) und der Inbetriebnahmefrequenz, beispielsweise bei 50 % der Füllfrequenz liegen, können Tropfen ausgestoßen werden, welche sich nicht entlang der Ausstoßrichtung bewegen, was ebenfalls verhindert werden soll. Eine Inbetriebnahmefrequenz, welche höchstens 10 % der Füllfrequenz beträgt, hat sich als geeignet herausgestellt, um lediglich Tropfen auszustossen, welche sich entlang der Ausstoßrichtung bewegen. Die Inbetriebnahmefrequenz kann beispielsweise in der Größenordnung von 10 Hz liegen. Bei derart niedrigen Frequenzen werden keine Schwingungen in die flüssige Metallschmelze eingekoppelt und der Ausstoß von Tropfen erfolgt im Wesentlichen geordnet in Ausstoßrichtung. Zusätzlich wird durch die niedrige Inbetriebnahmefrequenz eine ungewünschte Verschmutzung der Düse oder des Druckkopfes während des Verfahrens zur Inbetriebnahme vermieden. Zu einem Ausstoß von Tropfen, welche sich nicht geradlinig entlang der Ausstoßrichtung bewegen, kann es in Verfahrensschritt D) oder im Betriebsmodus auch kommen, wenn die Kolbenspitze mit einer Frequenz bewegt wird, welche größer als 10 % der Füllfrequenz ist und der Düsenkanal bereits komplett mit Metallschmelze gefüllt und von dieser benetzt ist. Nach einer Bewegung der Kolbenspitze zum Ausstoßen von Metallschmelze verbleibt der Meniskus, welcher auf der der Düsenkammer abgewandten Seite die Ausstoßöffnung des Düsenkanals nach außen begrenzt, für eine gewisse Zeit in Schwingung. Wird in diesem Zustand, in dem der Meniskus noch vom vorhergehenden Tropfenausstoß schwingt, eine weitere Bewegung der Kolbenspitze durchgeführt, so kann der nächste Tropfenausstoß bedingt durch den schwingenden Meniskus in eine nicht vorhersehbare Richtung erfolgen. Ein zu geringer zeitlicher Abstand zwischen zwei Amplituden, oder in anderen Worten zu hohe Frequenzen, bei der Bewegung der Kolbenspitze sind somit auch gegen Ende des Verfahrensschrittes D) und im Betriebsmodus zu vermeiden, um eine reproduzierbare Ausstoßrichtung der Tropfen zu erzielen. Die folgende Bewegung oder Amplitude der Kolbenspitze sollte erst dann vorgenommen werden, wenn sich der Meniskus nicht mehr in Schwingung von der vorhergehenden Bewegung oder Amplitude befindet. Wie lange der Meniskus in Schwingung verbleibt kann von der Größer der Amplitude, der Geometrie des Düsenkanals, der Viskosität der Metallschmelze und/oder von weiteren Faktoren abhängen.

In einer weiteren Ausführungsform ist vorgesehen, dass in Verfahrensschritt D) bei der stufenweisen Reduzierung der Amplitude der Bewegung der Kolbenspitze bei der Startamplitude begonnen wird und anschließend die Amplitude um eine Differenzamplitude schrittweise reduziert wird, wobei nach jeder Subtraktion der Differenzamplitude von der aktuellen Amplitude die Bewegung der Kolbenspitze über einen Zeitraum oder über eine Anzahl an Bewegungen fortgesetzt wird, bevor die Amplitude ein weiteres Mal um die Differenzamplitude reduziert wird, wobei während des Zeitraums oder während der Anzahl der Bewegungen bei einer konstanten Amplitude ermittelt wird, ob Metallschmelze aus dem Düsenkanal aus dem Druckkopf ausgestoßen wird. In dieser Ausführungsform wird in Verfahrensschritt D) ausgehend von der Startamplitude schrittweise jeweils von der aktuell eingestellten Amplitude eine Differenzamplitude abgezogen. Nach jeder Subtraktion dieser Differenzamplitude wird überprüft, ob Metallschmelze aus dem Düsenkanal ausgestoßen wird oder nicht. Wird Metallschmelze ausgestoßen, wird die aktuelle Amplitude ein weiteres Mal um die Differenzamplitude reduziert. Diese Vorgehensweise wird solange durchgeführt, bis kein Ausstoß von Metallschmelze aus der Düse mehr erfolgt. Nach jeder Subtraktion der Differenzamplitude wird die Kolbenspitze eine gewisse Anzahl an Bewegungen oder über einen gewissen Zeitraum mit einer konstanten Amplitude bewegt um sicher bestimmen zu können, ob Metallschmelze ausgestoßen wird oder nicht. Die Anzahl der Bewegungen der Kolbenspitze mit konstanter Amplitude, oder der Zeitraum, über den diese Bewegung durchgeführt wird, richten sich im Wesentlichen nach der Art und Weise, wie ermittelt wird, ob Metallschmelze ausgestoßen wird. Erst nachdem sicher bestimmt wurde, ob Metallschmelze austritt, wird die Amplitude in einem weiteren Schritt um die Differenzamplitude reduziert. Es ist möglich, eine konstante Differenzamplitude zu wählen und die Amplitude somit in konstanten Schritten zu reduzieren. Alternativ kann die Differenzamplitude bei den nacheinander erfolgenden Schritten der Reduzierung der Amplitude auch unterschiedlich gewählt werden. So kann beispielsweise zu Beginn von Verfahrensschritt D) die Differenzamplitude größer gewählt werden als im späteren Verlauf von Verfahrensschritt D), in dem sich die vorliegende Amplitude an eine zu erwartende Grenzamplitude annähert. Auf diese Weise kann die Zeit für die genaue Ermittlung einer Grenzamplitude reduziert werden. Alternativ kann Verfahrensschritt D) auch manuell durchgeführt werden, wobei der Bediener des Druckkopfes die Größe der Differenzamplitude für jeden Schritt individuell anpasst. In ähnlicher Weise kann die Anzahl der Bewegungen der Kolbenspitze oder der Zeitraum in dem die Kolbenspitze mit konstanter Amplitude bewegt wird, stets gleich groß oder alternativ unterschiedlich groß gewählt werden. So kann der Zeitraum der Bewegung der Kolbenspitze mit konstanter Amplitude zu Beginn von Verfahrensschritt D) kürzer gewählt werden, da bei größeren Amplituden schneller und sicherer erkannt werden kann ob Metallschmelze austritt. Bei einer Annäherung an eine zu erwartende Grenzamplitude kann der Zeitraum dann verlängert werden, um die Genauigkeit der Erkennung des Austretens von Metallschmelze aus dem Düsenkanal zu verbessern.

Des Weiteren ist günstiger Weise vorgesehen, dass die Kolbenspitze bei ihrer Vor- und Zurückbewegung in Verfahrensschritt C) stärker beschleunigt wird als in Verfahrensschritt D) und/oder als in einem Betriebsmodus, in welchem der Druckkopf Metallschmelze tropfenweise ausstößt, um ein Bauteil zu formen. In dieser Ausführungsform des Verfahrens wird die Kolbenspitze durch den Aktuator in Verfahrensschritt C) stärker beschleunigt als in Verfahrensschritt D). Durch diese stärkere Beschleunigung kann die höhere Füllfrequenz in Verfahrensschritt C) erreicht werden, welche günstig zur Entfernung von Luftblasen aus der Metallschmelze ist. Darüber hinaus begünstigt die hohe Beschleunigung in Verfahrensschritt C) ein Eindringen von flüssiger Metallschmelze in den Düsenkanal. In Verfahrensschritt D) ist die Beschleunigung der Kolbenspitze dementsprechend niedriger, wodurch ein kontrollierter Ausstoß von flüssiger Metallschmelze aus dem Düsenkanal erreicht wird. Die reduzierte Beschleunigung in Verfahrensschritt D) dient auch dazu, das Auftreten von Spray zu vermeiden, was in Verfahrensschritt D) unerwünscht ist, da es die Bestimmung des Austreten von Metallschmelze erschwert. Die Beschleunigung in Verfahrensschritt C) ist zusätzlich größer als die Beschleunigung im Betriebsmodus des Druckkopfes, in dem dieser Metallschmelze tropfenweise ausstößt um ein Bauteil zu formen.

Es ist möglich, dass die Kolbenspitze bei ihrer Vor- und Zurückbewegung in Verfahrensschritt D) stärker beschleunigt wird als in einem Betriebsmodus, in welchem der Druckkopf Metallschmelze tropfenweise ausstößt, um ein Bauteil zu formen. Die Beschleunigung der Kolbenspitze in Verfahrensschritt D) kann größer als die Beschleunigung der Kolbenspitze im Betriebsmodus des Druckkopfes zur Erzeugung eines Bauteiles gewählt sein. Durch eine höhere Beschleunigung im Inbetriebnahmeverfahren wird begünstigt, dass Metallschmelze die gesamte Oberfläche des Düsenkanals benetzt. Die Beschleunigung der Kolbenspitze in Verfahrensschritt D) kann beispielsweise um zumindest einen Faktor von 5, bevorzugt um zumindest einen Faktor von 10 größer als die Beschleunigung im Betriebsmodus sein. Weiterhin ist es möglich, in Verfahrensschritt D) die Kolbenspitze mit der gleichen Beschleunigung zu bewegen wie im Betriebsmodus. Dies hat den Vorteil, dass in Verfahrensschritt D) die gleichen Betriebsparameter verwendet werden wie im Betriebsmodus, was eine Übertragbarkeit der ermittelten Grenzamplitude begünstigt. Schließlich ist es auch möglich, zu Beginn von Verfahrensschritt D), insbesondere bei der Verwendung der Startamplitude, eine Beschleunigung zu wählen, welche größer als die Beschleunigung im Betriebsmodus ist, um zunächst eine Benetzung des Düsenkanals zu fördern. Im weiteren Verlauf von Verfahrensschritt D) kann dann, insbesondere bei Annäherung an die Grenzamplitude, die Beschleunigung auf einen Wert reduziert werden, welcher der Beschleunigung der Kolbenspitze im Betriebsmodus entspricht. Diese variable Beschleunigung ermöglicht vorteilhaft eine gute Benetzung des Düsenkanals zu Beginn von Verfahrensschritt D) und führt gleichzeitig zu aussagekräftigen Ergebnissen für die ermittelte Grenzamplitude am Ende von Verfahrensschritt D).

Des Weiteren ist vorgesehen, dass nach dem Abschluss von Verfahrensschritt F) der Druckkopf in einen Betriebsmodus überführt wird, in welchem der Druckkopf Metallschmelze tropfenweise ausstößt, um ein Bauteil zu formen, wobei dieses tropfenweise Ausstoßen von Metallschmelze in einer Standardfrequenz und/oder mit einer Amplitude erfolgt, welche größer als die Grenzamplitude ist. Nach der Beendigung des Verfahrens zur Inbetriebnahme des Düsenkanals wird der Druckkopf in einen Betriebsmodus überführt, in dem er Bauteile formt. Im Betriebsmodus wird die Kolbenspitze vom Aktuator in der Düsenkammer vor und zurück bewegt, wodurch Tropfen flüssiger Metallschmelze aus dem Düsenkanal in Ausstoßrichtung ausgestoßen werden. Im Betriebsmodus wird die Kolbenspitze mit einer Standardfrequenz bewegt. Üblicherweise liegt die Standardfrequenz in einem Bereich zwischen 100 Hz und 1 kHz. Im Betriebsmodus wird die Kolbenspitze mit einer Amplitude bewegt, welche gleich oder größer als die Grenzamplitude ist. Die Grenzamplitude stellt diejenige Amplitude dar, für die im Inbetriebnahmeverfahren ermittelt wurde, dass gerade noch ein Tropfenausstoß erfolgt. Bevorzugt wird die Amplitude im Betriebsmodus größer als die Grenzamplitude gewählt, um eine gewisse Sicherheit zu haben, dass es im Betriebsmodus stets zu einem Ausstoß von Metallschmelze aus dem Düsenkanal in Tropfenform kommt. Zur Bestimmung der Amplitude im Betriebsmodus können beispielsweise statistische Berechnungen eingesetzt werden, welche auf den ermittelten Grenzamplituden und der Anzahl der Wiederholungen n in den Verfahrensschritten D) und E) beruhen. Auf diese Weise kann für den Betriebsmodus eine Amplitude errechnet werden, welche mit hoher statistischer Sicherheit einen reproduzierbaren und qualitativ hochwertigen Ausstoß von Metallschmelze zur Herstellung eines Bauteils ermöglicht. Durch eine Vergrößerung der Amplitude im Betriebsmodus kann auch der Durchmesser des ausgestoßenen Tropfens Metallschmelze vergrößert werden. Während der Inbetriebnahme des Düsenkanals spielt der Tropfendurchmesser jedoch eine untergeordnete Rolle.

Bei einer bevorzugten Ausgestaltung ist vorgesehen, dass das Verfahren zumindest teilweise automatisiert durchgeführt wird, wobei eine Regeleinheit die Verfahrensschritte regelt und der Abschluss des Verfahrens von der Regeleinheit festgestellt und eine entsprechende Mitteilung an den Bediener von der Regeleinheit ausgegeben wird. In dieser Ausführungsform ist eine Regeleinheit vorgesehen, welche zumindest einen Teil des Verfahrens automatisiert durchführt. Dabei wird der Aktuator automatisch von der Regeleinheit gesteuert, welche dessen Amplitude, Beschleunigung und Frequenz regelt. Darüber hinaus wird die Grenzamplitude von der Regeleinheit automatisiert bestimmt, gespeichert und ausgewertet. Der Abschluss des Verfahrens zur Inbetriebnahme des Düsenkanals wird ebenfalls von der Regeleinheit festgestellt. Durch diese Automatisierung ist das Verfahren besonders reproduzierbar durchzuführen und es werden Daten gespeichert, welche als Nachweis eines korrekt durchgeführten Verfahrens zur Inbetriebnahme verwendet werden können. Selbstverständlich kann das Verfahren auch, zumindest teilweise, manuell durchgeführt werden, wobei beispielsweise die Differenzamplitude in Verfahrensschritt D) manuell über eine Schnittstelle eingegeben wird.

In einer weiteren Ausführungsform ist vorgesehen, dass die Amplitude der Bewegung der Kolbenspitze in den Verfahrensschritten C) und D), sowie in dem Betriebsmodus, in welchem der Druckkopf Metallschmelze tropfenweise ausstößt um ein Bauteil zu formen, durch eine von der Regeleinheit bereitgestellte Arbeitsmenge erzeugt wird, welche im Aktuator wirkt, wobei ein Arbeitsaufnahmeelement vorgesehen ist, welches dazu ausgebildet ist, eine Teilarbeitsmenge aufzunehmen und in dem Betriebsmodus das Arbeitsaufnahmeelement einen Teil der von der Regeleinheit bereitgestellten Arbeitsmenge aufnimmt, wobei im Betriebsmodus nur der übrige Teil der Arbeitsmenge durch den Aktuator umgesetzt wird, wodurch eine gegenüber der Umsetzung der vollen Arbeitsmenge reduzierte Amplitude und/oder Beschleunigung der Kolbenspitze bewirkt wird. Die Amplitude der Kolbenspitze ist abhängig von einer Arbeitsmenge, welche durch den Aktuator umgesetzt wird. Diese Arbeitsmenge wird von der Regeleinheit bereitgestellt. Je größer die Arbeitsmenge ist, desto größer ist die Amplitude der Kolbenspitze. Im Verfahren zur Inbetriebnahme, insbesondere in den Verfahrensschritten C) und D) wird die Kolbenspitze bevorzugt mit einer größeren Amplitude und/oder mit einer größeren Beschleunigung bewegt, als im Betriebsmodus. Es ist auch möglich, dass die Arbeitsmenge im Verfahren zur Inbetriebnahme und im Betriebsmodus gleich groß ist. Weiterhin ist es möglich, dass die Amplitude der Kolbenspitze im Betriebsmodus größer als im Verfahren zur Inbetriebnahme ist, beispielsweise wenn im Betriebsmodus Tropfen mit besonders großem Volumen aus dem Druckkopf ausgestoßen werden sollen. In den meisten Fällen ist die Arbeitsmenge jedoch im Verfahren zur Inbetriebnahme größer, um die flüssige Metallschmelze effektiv in den Düsenkanal zu treiben und eine vollständige Benetzung zu erreichen. Dazu ist bevorzugt auch die Beschleunigung der Kolbenspitze im Verfahren zur Inbetriebnahme größer, wobei die Beschleunigung mit der zeitlichen Änderung der übertragenen Arbeitsmenge auf den Aktuator korreliert. Sowohl im Verfahren zur Inbetriebnahme als auch im Betriebsmodus muss die Regeleinheit so ausgeführt sein, dass sie die ausgegebene Arbeitsmenge und damit die angesteuerte Amplitude der Kolbenspitze präzise regelt. Da sich die Arbeitsmenge, wie zuvor beschrieben, unterscheiden kann, stellt dies hohe Anforderungen an die Ausgabe der Arbeitsmenge der Regeleinheit. In dieser Ausführungsform ist daher ein Arbeitsaufnahmeelement vorgesehen, welches im Betriebsmodus, in dem meist die benötigte Arbeitsmenge geringer ist, einen Teil der von der Regeleinheit ausgegebenen Arbeitsmenge aufnimmt. Dies hat zur Folge, dass die Regeleinheit stets eine Arbeitsmenge in der gleichen Größenordnung ausgibt. Dadurch kann die Regeleinheit im Bereich dieser Größenordnung besonders präzise ausgeführt sein. In anderen Größenordnungen von Arbeitsmengen kann die Regeleinheit weniger präzise arbeiten, was die Anforderungen an die Regeleinheit reduziert und diese somit auch kostengünstiger macht. Im Betriebsmodus fließt dann stets ein Teil der Arbeitsmenge in das Arbeitsaufnahmeelement, welches parallel zum Aktuator geschaltet sein kann. Durch eine solche Parallelschaltung kann die Amplitude der Kolbenspitze im Betriebsmodus reduziert werden, obwohl von der Regeleinheit eine Arbeitsmenge in der gleichen Größenordnung wie im Verfahren zur Inbetriebnahme ausgegeben wird. Ist beispielsweise der Aktuator als Piezoelement ausgeführt, so wird die Arbeitsmenge durch eine Ladungsmenge gebildet. In diesem Fall kann ein Arbeitsaufnahmeelement durch einen zum Aktuator parallel geschalteten elektrischen Kondensator gebildet werden. Das Vorsehen des beschriebenen Arbeitsaufnahmeelementes bewirkt auch eine verbesserte Steuerbarkeit der Beschleunigung und Geschwindigkeit der Kolbenspitze. Im Verfahren zur Inbetriebnahme wird die Kolbenspitze bevorzugt mit einer höheren Beschleunigung bewegt als im Betriebsmodus, um die Metallschmelze in die Düsenkammer und den Düsenkanal hineinzutreiben. Für die Realisierung von hohen Beschleunigungen muss eine Arbeitsmenge in kurzer Zeit auf den Aktuator übertragen werden. Im Betriebsmodus, in dem geringere Beschleunigungen der Kolbenspitze benötigt werden, soll dagegen die Arbeitsmenge langsamer, das heißt in einem längeren Zeitraum, auf den Aktuator übertragen werden. Die Regeleinheit weist auch für die zeitliche Änderung der übertragenen Arbeitsmenge einen Bereich auf, in dem sie besonders präzise arbeitet. In anderen Betriebsbereichen funktioniert die Regeleinheit dagegen weniger präzise und die Beschleunigung der Kolbenspitze kann somit in diesen Bereichen weniger präzise eingestellt werden. Die bedarfsweise Parallelschaltung des Arbeitsaufnahmeelementes und die damit verbundene bedarfsweise Aufnahme einer Teilmenge der übertragenen Arbeitsmenge durch das Arbeitsaufnahmeelement kann vorteilhaft dazu genutzt werden, die Beschleunigung und Geschwindigkeit der Kolbenspitze präzise einzustellen. Wird beispielsweise ein Arbeitsaufnahmeelement mit der gleichen Speicherkapazität wie der Aktuator parallel zum Aktuator geschaltet, so halbiert sich bei gleich bleibenden Einstellungen der Regeleinheit die Arbeitsmenge pro Zeit, welche auf den Aktuator übertragen wird. Dadurch halbiert sich im Wesentlichen auch die Beschleunigung der Kolbenspitze durch den Aktuator.

Das zuvor beschriebene Vorsehen oder die zuvor beschriebene Verwendung eines Arbeitsaufnahmeelementes, welches bedarfsweise parallel zum Aktuator schaltbar ist, ist auch vorteilhaft unabhängig von dem erfindungsgemäßen Verfahren zur Inbetriebnahme des Druckkopfes. Es ist somit auch ein Verfahren zum Betrieb eines Druckkopfes für die Verarbeitung flüssiger Metallschmelzen offenbart, wobei der Druckkopf folgende Komponenten umfasst:
- einen Tiegel zur Aufnahme eines zu druckenden Metalls,
- eine Heizeinrichtung zum Aufschmelzen des Metalls,
- eine Düse, welche mit dem Tiegel verbunden ist und welche eine Düsenkammer und einen Düsenkanal, welcher sich entlang einer Ausstoßrichtung erstreckt, aufweist, wobei die Düsenkammer und der Düsenkanal ineinander übergehen,
- einen Aktuator, welcher einen Kolben mit einer Kolbenspitze, welche in die Düsenkammer einbringbar ist, aufweist, wobei der Aktuator dazu ausgelegt ist, den Kolben mit einer Amplitude linear vor und zurück zu bewegen, insbesondere in einer Richtung parallel zur Ausstoßrichtung,
wobei das Verfahren folgende Schritte umfasst:
I. Inbetriebnahme des Druckkopfes zur Vorbereitung auf einen Betriebsmodus, in welchem der Druckkopf Metallschmelze tropfenweise ausstößt um ein Bauteil zu formen,
II. Überführung des Druckkopfes in den Betriebsmodus,
wobei die Amplitude der Bewegung der Kolbenspitze in den Verfahrensschritten I. und II. durch eine von einer Regeleinheit bereitgestellte Arbeitsmenge erzeugt wird, welche im Aktuator wirkt, wobei ein Arbeitsaufnahmeelement vorgesehen ist, welches dazu ausgebildet ist, eine Teilarbeitsmenge aufzunehmen und in Verfahrensschritt II. das Arbeitsaufnahmeelement einen Teil der von der Regeleinheit bereitgestellten Arbeitsmenge aufnimmt, wobei in Verfahrensschritt II. nur der übrige Teil der Arbeitsmenge durch den Aktuator umgesetzt wird.

Bei diesem Verfarhen kann die Inbetriebnahme des Druckkopfes in Verfahrensschritt I. nach einem beliebigen Inbetriebnahmeverfahren erfolgen und ist nicht auf das erfindungsgemäße Inbetriebnahmeverfahren beschränkt. Die bedarfsweise Parallelschaltung des Arbeitsaufnahmeelementes bewirkt dabei die gleichen Vorteile einer präziseren Steuerung des Aktuators, welche zuvor in Zusammenhang mit einer Ausführungsform des erfindungsgemäßen Verfahrens beschrieben wurden. Auch dieses Verfahren bewirkt somit eine Verbesserung der Qualität und der Reproduzierbarkeit des Druckens mit einem Druckkopf.

Geschickter Weise ist vorgesehen, dass eine Ausstoßerkennungsvorrichtung verwendet wird, welche ermittelt, ob Metallschmelze aus dem Düsenkanal aus dem Druckkopf ausgestoßen wird. In dieser Ausführungsform wird durch eine Ausstoßerkennungsvorrichtung manuell oder automatisch festgestellt, ob Metallschmelze aus dem Düsenkanal ausgestoßen wird oder nicht. Die Ausstoßerkennungsvorrichtung kann dabei auf unterschiedlichen physikalischen Wirkprinzipien beruhen.

Bei einer bevorzugten Ausgestaltung ist vorgesehen, dass die Ausstoßerkennungsvorrichtung eine Blitzlichtquelle, eine Kamera und eine elektronische Erkennungseinheit umfasst, wobei die Erkennungseinheit durch automatische Analyse von durch die Kamera aufgenommenen Bildern ermittelt, ob Metallschmelze aus dem Düsenkanal aus dem Druckkopf ausgestoßen wird. In dieser Ausführungsform ermittelt eine elektronische Erkennungseinheit optisch, ob Metallschmelze aus dem Düsenkanal aus dem Druckkopf ausgestoßen wird oder nicht. Zusätzlich ist eine Blitzlichtquelle, auch Stroboskop genannt, vorgesehen, welche in kurzen zeitlichen Abständen Lichtblitze ausgibt und möglicherweise ausgestoßene Tropfen von Metallschmelze beleuchtet. Die Beleuchtung kann dabei aus der gleichen Richtung erfolgen, in der auch die Kamera angeordnet ist oder aus einer Position erfolgen, welche, bezogen auf den Tropfen, der Kamera gegenüberliegt. Somit können die Tropfen entweder im Auflichtverfahren oder im Durchlichtverfahren beleuchtet werden. Die Kamera erfasst bei jedem dieser Lichtblitze ein Bild eines Bereichs benachbart zum Düsenkanal. Die elektronische Erkennungseinheit ermittelt durch Auswertung dieser von der Kamera aufgenommenen Bilddaten automatisch, ob Tropfen von Metallschmelze im Bild zu sehen sind.

Geschickter Weise ist vorgesehen, dass die Amplitude der Bewegung der Kolbenspitze in Verfahrensschritt C) zwischen 0,5 pm und 60 pm liegt. Eine Amplitude in diesem Bereich hat sich als besonders wirksam für die Entfernung von Luftblasen aus der flüssigen Metallschmelze im Düsenkanal herausgestellt. Bevorzugt liegt auch die Startamplitude in Verfahrensschritt D) und/oder die Betriebsamplitude in dieser Größenordnung. Auch die Amplitude im Betriebsmodus kann in dem genannten Bereich liegen.

In einer vorteilhaften Ausgestaltung ist vorgesehen, dass der Aktuator zumindest ein Piezoelement umfasst, welches mit dem Kolben gekoppelt ist, wobei die Hauptausdehnungsrichtung des Piezoelementes parallel zur Längsachse des Kolbens ausgerichtet ist, die Regeleinheit die Ausdehnung des Piezoelementes und damit die Vor- und Zurückbewegung der mit dem Piezoelement gekoppelten Kolbenspitze regelt, wobei die Zurückbewegung des Kolbens zumindest teilweise durch Federkraft erfolgt, wobei die von der Regeleinheit auf das Piezoelement übertragene Arbeitsmenge, in Form von elektrischer Ladung, in Korrelation zur Amplitude der Kolbenspitze steht. In dieser Ausführungsform beruht der Aktuator auf dem Wirkprinzip eines Piezoelementes. Piezoelemente zeichnen sich durch eine hohe Genauigkeit zur Erzeugung einer Amplitude aus. Weiterhin können Piezoelemente mit einer sehr hohen Taktfrequenz angesteuert werden, wodurch auch die hohen Frequenzen in Verfahrensschritt C) durch einen solchen Aktuator realisiert werden können. Bei Beaufschlagung eines Piezoelementes mit einer bestimmten Ladungsmenge, welche eine Arbeitsmenge darstellt, erfolgt eine Dehnung des Piezoelementes. Dieser Effekt wird meist zur Erzeugung einer Vorwärtsbewegung des Kolbens und der Kolbenspitze genutzt. Die Erzeugung einer entsprechenden Rückwärtsbewegung wird meist dadurch erreicht, dass die elektrische Ladung vom Piezoelement entfernt wird und gleichzeitig ein entsprechend positioniertes Federpaket das Piezoelement in einen nicht gedehnten Zustand zurückdrückt. Es ist auch möglich, für eine Zurückbewegung des Kolbens und der Kolbenspitze nur einen Teil der Ladungsmenge, welche zuvor auf das Piezoelement übertragen wurde, wieder zu entfernen. In diesem Fall verbleibt das Piezoelement in einem teilgedehnten Zustand und ist somit länger als im Zustand, in dem sich gar keine Ladungsmenge auf dem Piezoelement befindet. Die Regeleinheit kann zur Regelung des Aktuators die Ladungsmenge auf dem Piezoelement bei der Vor- und bei der Zurückbewegung unabhängig voneinander regeln und somit unterschiedliche Amplituden realisieren. Die Größe der Amplitude, welche durch ein Piezoelement erzeugt wird, steht in direkter Korrelation zur Ladungsmenge, welche durch die Regeleinheit dem Piezoelement zugeführt wird.

Geschickter Weise ist vorgesehen, dass die Regeleinheit die Stromstärke, mit der Ladung auf das Piezoelement übertragen wird, regelt, wobei die übertragene Stromstärke in Korrelation zur Beschleunigung der Kolbenspitze steht. Die Stromstärke beeinflusst, wie schnell eine bestimmte Arbeitsmenge oder Ladungsmenge auf das Piezoelement übertragen werden kann. Um die übertragene Ladungsmenge zu erhöhen, kann entweder die Stromstärke oder die Übertragungszeit erhöht werden. Somit hat die Stromstärke bei der Ladung und/oder der Entladung des Piezoelementes direkten Einfluss auf die Beschleunigung der Kolbenspitze. Soll die Kolbenspitze stärker beschleunigt werden, wird das Piezoelement mit einer höheren Stromstärke geladen oder entladen, wodurch die Zeit zum Erreichen der Zielkapazität verringert wird.

Des Weiteren ist vorgesehen, dass der Aktuator eine Bewegungsvorrichtung umfasst, welche das Piezoelement mit daran gekoppeltem Kolben in einer Richtung parallel zur Längsrichtung des Kolbens relativ zur Düse in Verfahrensschritt B1) bewegt, wobei die Bewegungsvorrichtung dazu ausgelegt ist, eine Amplitude zu erzeugen, welche zumindest um den Faktor zehn größer als die maximale Amplitude der Ausdehnung des Piezoelementes ist. In dieser Ausführungsform wird in Verfahrensschritt B1) die Kolbenspitze durch eine zum Piezoelement unterschiedliche Bewegungsvorrichtung bewegt. Üblicherweise liegt die maximal mögliche Amplitude eines Piezoelements in der Größenordnung von 60 pm. Um die Benetzung der Düsenkammer und des Düsenkanals signifikant zu fördern, hat sich eine Bewegung der Kolbenspitze in Verfahrensschritt B1) in der Größenordnung von einigen Millimetern als besonders wirksam herausgestellt. Piezoelemente sind nicht in der Lage, derart große Amplituden zu erzeugen. Somit wird als Teil des Aktuators zusätzlich eine Bewegungsvorrichtung vorgesehen. Diese Bewegungsvorrichtung kann beispielsweise in einer einfachen Ausführungsform durch eine Führung parallel zur Ausstoßrichtung gebildet werden. Zur Durchführung des Verfahrensschrittes B1) wird das Piezoelement mit dem daran angeordneten Kolben von den übrigen Teilen des Aktuators abgelöst und manuell vor und zurück bewegt. Nach der Durchführung von Verfahrensschritt B1) wird dann das Piezoelement wieder fixiert und mit den nächsten Verfahrensschritten fortgefahren. Alternativ kann die Bewegungsvorrichtung auch durch eine Linearachse gebildet sein, welche das Piezoelement und den Kolben mit der Kolbenspitze in Verfahrensschritt B1) vor- und zurückbewegt. Eine solche Linearachse umfasst üblicherweise zumindest eine Führung und einen Linearantrieb, welcher von der Regeleinheit gesteuert wird. Die Bewegungsvorrichtung kann das Piezoelement zusammen mit dem Kolben bewegen. Alternativ ist es auch möglich, dass in Verfahrensschritt B1) das Piezoelement nicht bewegt wird und lediglich der Kolben mit der Kolbenspitze durch die Bewegungsvorrichtung vor- und zurück bewegt werden.

Des Weiteren ist günstiger Weise vorgesehen, dass in Verfahrensschritt C1) der Überdruck im Inneren des Tiegels gegenüber dem Überdruck im Inneren des Tiegels in Verfahrensschritt B) zumindest um den Faktor 4 reduziert wird. Bevorzugt wird auch in Verfahrensschritt C1) ein Überdruck gegenüber der Umgebung aufrechterhalten, um die Nachförderung von flüssiger Metallschmelze in die Düse zu begünstigen.

In einer vorteilhaften Ausgestaltung ist vorgesehen, dass der Überdruck im Inneren des Tiegels in Verfahrensschritt B) zwischen 20 mbar und 30 mbar liegt und/oder Überdruck im Inneren des Tiegels in Verfahrensschritt C1) zwischen 3 mbar und 8 mbar liegt. Die beschriebenen Überdrücke haben sich als besonders vorteilhaft zur Inbetriebnahme eines Düsenkanals herausgestellt.

In einer weiteren Ausführungsform ist vorgesehen, dass in Verfahrensschritt C) die Bewegung der Kolbenspitze Schwingungen in die Metallschmelze einkoppelt und die innere Oberfläche des Düsenkanals durch die schwingende Metallschmelze zumindest teilweise benetzt wird. Die hochfrequente Bewegung der Kolbenspitze in Verfahrensschritt C) versetzt die flüssige Metallschmelze in Schwingungen. Durch diese Schwingungen werden Luftblasen gelöst und eine Benetzung der metallophoben Oberfläche im Inneren der Düsenkammer und im Inneren des Düsenkanals gefördert.

Des Weiteren ist vorteilhafter Weise vorgesehen, dass in Verfahrensschritt D) die Startamplitude durch eine Startladung gebildet wird, welche von der Regeleinheit dem Piezoelement aufweisenden Aktuator zugeführt wird und bei der stufenweisen Reduzierung der Amplitude die dem Aktuator zugeführte Ladung stufenweise reduziert wird. In dieser Ausführungsform steht die Amplitude der Kolbenspitze in direkter Korrelation zu einer Ladungsmenge, welche von der Regeleinheit auf ein Piezoelement übertragen wird, welches zum Aktuator gehört. Dementsprechend bewirkt in Verfahrensschritt D) eine Reduzierung der übertragenen Ladungsmenge eine Reduzierung der Amplitude, welche zur Bestimmung der Grenzamplitude vorgenommen wird. Alternativ ist es denkbar, einen Aktuator vorzusehen, welcher kein Piezoelement umfasst und auf einem anderen physikalischen Wirkprinzip beruht. Beispielsweise könnte ein pneumatischer Aktuator vorgesehen sein, bei dem die Amplitude durch eine Menge an Druckluft bestimmt wird, welche dem Aktuator durch die Regeleinheit zur Bewegung der Kolbenspitze zugeführt wird. In diesem Fall wird die Startamplitude durch eine bestimmte Menge an Druckluft bestimmt, welche im weiteren Verlauf von Verfahrensschritt D) schrittweise reduziert wird.

In einer vorteilhaften Ausgestaltung ist vorgesehen, dass in Verfahrensschritt D) die Grenzamplitude durch eine Grenzladung gebildet wird, welche von der Regeleinheit dem Aktuator zugeführt wird. Sofern der Aktuator ein Piezoelement umfasst, welches die Kolbenspitze bewegt, wird die in Verfahrensschritt D) ermittelte Grenzamplitude durch einen Grenzladung gebildet. Diese Grenzladung ist diejenige Ladungsmenge, bei welcher gerade noch flüssige Metallschmelze aus dem Düsenkanal ausgestoßen wird. Im Betriebsmodus des Druckkopfes werden zur Herstellung eines Bauteils anschließend Ladungen oder Ladungsmengen verwendet, welche größer oder gleich der Grenzladung sind.

In einer Ausführungsform ist vorgesehen, dass die von der Regeleinheit zur Bewegung der Kolbenspitze bereitgestellte Arbeitsmenge in Form von elektrischer Ladung bereitgestellt wird, welche in dem Piezoelement des Aktuators zumindest teilweise umgesetzt wird und das Arbeitsaufnahmeelement durch einen elektrischen Kondensator gebildet wird, welcher bedarfsweise parallel zum Piezoelement schaltbar ist, wobei das Arbeitsaufnahmeelement in den Verfahrensschritten C) und D) nicht parallel zum Piezoelement geschaltet wird und wobei das Arbeitsaufnahmeelement im Betriebsmodus parallel zum Piezoelement geschaltet wird, um eine Teilarbeitsmenge in Form von elektrischer Ladung der von der Regeleinheit bereitgestellten Arbeitsmenge aufzunehmen. Auch in dieser Ausführungsform des Verfahrens umfasst der Aktuator ein Piezoelement, welches die Kolbenspitze direkt proportional zu einer von der Regeleinheit auf das Piezoelement übertragenen Ladung bewegt. In diesem Fall wird die von der Regeleinheit bereitgestellte Arbeitsmenge durch eine elektrische Ladung oder elektrische Ladungsmenge gebildet. In den Verfahrensschritten C) und D) wird die gesamte von der Regeleinheit bereitgestellte Ladungsmenge auf das Piezoelement übertragen, wodurch sich eine entsprechende Bewegung der Kolbenspitze mit großer Amplitude ergibt. Dementsprechend wird die gesamte von der Regeleinheit abgegebene elektrische Stromstärke auf den Aktuator übertragen, was zu einer hohen Beschleunigung der Kolbenspitze führt. In dieser Ausführungsform wird weiterhin das zuvor beschriebene Arbeitsaufnahmeelement durch einen zum Piezoelement wahlweise parallel schaltbaren elektrischen Kondensator gebildet. Zur Durchführung des Verfahrens und insbesondere der Verfahrensschritte C) und D) wird das Arbeitsaufnahmeelement in Form des Kondensators bevorzugt nicht verwendet, so dass die gesamte Ladungsmenge und/oder Stromstärke auf das Piezoelement übertragen wird. Im Betriebsmodus, also nach der Durchführung des Verfahrens zur Inbetriebnahme des Düsenkanals, wird dann bevorzugt der elektrische Kondensator parallel zum Piezoelement geschaltet, wodurch ein Teil der von der Regeleinheit bereitgestellten Ladungsmenge und/oder Stromstärke auf den Kondensator und nur ein verbleibender Teil auf das Piezoelement übertragen wird. Somit nimmt in dieser Ausführungsform der Kondensator eine Teilarbeitsmenge in Form von elektrischer Ladung bzw. eine Teilmenge der elektrischer Stromstärke von der Regeleinheit auf. Auf diese Weise kann die Regeleinheit in sehr ähnlicher Weise wie bei der Durchführung des Verfahrens zur Inbetriebnahme betrieben werden und gibt insbesondere Ladungsmengen und/oder Stromstärken in vergleichbarer Größenordnung aus. Dadurch kann die Regeleinheit stets in einem optimalen Arbeitsbereich oder Betriebsbereich betrieben werden, in dem die Genauigkeit der Regelung und die Reproduzierbarkeit der abgegebenen Ladungsmenge optimal ist. Insgesamt ergibt sich durch diese Parallelschaltungen von einem Piezoelement und einem elektrischen Kondensator ein einfach aufgebautes, stabiles und genaues System zur Regelung des Druckkopfes sowohl bei der Inbetriebnahme als auch im Betriebsmodus. Im Betriebsmodus hat es sich als vorteilhaft herausgestellt, die Kolbenspitze in der Düsenkammer mit geringerer Beschleunigung zu bewegen als im Verfahren zur Inbetriebnahme. Durch eine geringere Beschleunigung, insbesondere bei der Rückbewegung der Kolbenspitze nach dem Ausstoß eines Tropfens aus dem Düsenkanal, wird vermieden, dass durch den Düsenkanal Umgebungsluft angesaugt wird, um das von der Kolbenspitze freigegebene Volumen in der Düsenkammer auszugleichen. Die Beschleunigung der Kolbenspitze wird durch die Stromstärke geregelt, welche von der Regeleinheit zum Aktuator oder umgekehrt fließt. Die Regeleinheit weist dabei eine minimal mögliche Stromstärke auf, mit der der Transport der Ladung zum und vom Piezoelement vorgenommen werden kann. Diese minimal mögliche Stromstärke korreliert mit der minimalen Begrenzung der Beschleunigung der Kolbenspitze. Durch eine bedarfsweise Parallelschaltung eines Kondensators als Arbeitsaufnahmeelement fließt ein Teil der übertragenen Stromstärke in diesen Kondensator, wodurch die effektiv zum Piezoelement fließende Stromstärke unterhalb die minimal mögliche Stromstärke der Regeleinheit reduziert werden kann. Die Parallelschaltung des Kondensators bewirkt in diesem Fall eine zusätzliche Reduzierung der Beschleunigung der Kolbenspitze, was im Betriebsmodus zu reproduzierbareren Druckergebnissen führen kann. Selbstverständlich kann eine Parallelschaltung des Kondensators zum Piezoelement auch dazu genutzt werden, die Stromstärke bei der Ladung des Piezoelementes und somit die Beschleunigung der Kolbenspitze beim Ausstoß eines Tropfens zu reduzieren. Ein als Kondensator ausgebildetes Arbeitsaufnahmeelement kann somit in Kombination mit den Einstellungen der Regeleinheit sowohl zur Beeinflussung der Amplitude als auch der Beschleunigung der Kolbenspitze verwendet werden. Die elektrischen Parameter Ladungsmenge und Stromstärke können dabei unabhängig voneinander an der Regeleinheit eingestellt und verändert werden um günstige Ergebnisse zu erreichen. So ist es beispielsweise auch möglich, im Betriebsmodus den Kondensator parallel zum Piezoelement zu schalten, die abgegebene Ladungsmenge zu erhöhen und gleichzeitig die abgegebene Stromstärke zu reduzieren. In diesem Fall kann im Betriebsmodus beispielsweise die Kolbenspitze mit einer größeren Amplitude als im Verfahren zur Inbetriebnahme, jedoch mit einer reduzierten Beschleunigung im Vergleich zum Verfahren zur Inbetriebnahme bewegt werden. Die Beeinflussung von Amplitude und Beschleunigung kann unabhängig voneinander vorgenommen werden.

Vorteilhafter Weise ist vorgesehen, dass in den Verfahrensschritten E) und F) n gleich 2 ist. In dieser Ausführungsform ist n = 2, wodurch Verfahrensschritt D) nach einer erstmaligen Durchführung gemäß Verfahrensschritt E) noch zweimal wiederholt wird. Auf diese Weise wird vor Beendigung des Verfahrens gemäß Verfahrensschritt F) dreimal eine Grenzamplitude bestimmt. Auf Basis dieser drei ermittelten Werten für eine Grenzamplitude kann bereits mit hoher Sicherheit ausgesagt werden, ob bereits eine vollständige Benetzung des Düsenkanals vorliegt. Selbstverständlich kann n auch andere Werte annehmen und beispielsweise zwischen 0 und 10 gewählt werden. Weiterhin kann n auch an die bereits ermittelten Werte für die Grenzamplitude dynamisch angepasst werden. Unter einer solchen dynamischen Anpassung ist zu verstehen, dass das Verfahren gemäß Verfahrensschritt F) bei n = 2 beendet wird, sofern für alle drei ermittelten Grenzamplituden gilt, dass diese niedriger als eine zuvor definierte Grenzamplitude sind. Ist dies nicht der Fall, das heißt, ist eine oder mehrere der drei ermittelten Grenzamplitude größer als die zuvor definierte Grenzamplitude, wird n um 1 erhöht und das Verfahren zur Inbetriebnahme solange fortgesetzt, bis in drei Durchläufen von Verfahrensschritt D) hintereinander eine Grenzamplitude ermittelt wird, welche kleiner als die zuvor definierte Grenzamplitude ist. Diese dynamische Anpassung von n kann alternativ auch basierend auf einer Streuung mehrerer zuvor ermittelter Grenzamplitude erfolgen. Liegt eine starke Streuung in hintereinander ermittelten Grenzamplituden vor, so kann dies ein Indiz für eine unzureichende Benetzung des Düsenkanals sein. In diesem Fall wird das Verfahren zur Inbetriebnahme solange vorgesetzt, bis die Streuung unterhalb eines zuvor definierten Wertes liegt. Entsprechende Werte für eine zuvor definierte Grenzamplitude oder eine zuvor definierte maximale Streuung in den Grenzamplitude können beispielsweise durch zuvor durchgeführte Versuche ermittelt werden. Alternativ zu der erfindungsgemäßen Bestimmung der Benetzung über eine statistisch sichere Erreichung einer definierten Grenzamplitude kann der Benetzungsgrad auch optisch ermittelt werden. Bei einer solchen optischen Ermittlung wird beispielsweise unter Zuhilfenahme einer Kamera überprüft, ob der von außerhalb des Druckkopfes sichtbare Bereich der Innenwand des Düsenkanals, angrenzend an die Austrittsöffnung des Düsenkanals, tatsächlich mit Metallschmelze benetzt ist. Eine solche optische Ermittlung ist jedoch deutlich fehleranfälliger und aufwändiger als das beschriebene Verfahren zur Inbetriebnahme eines Druckkopfes.

Die Aufgabe der Erfindung wird weiterhin gelöst durch einen Druckkopf zur die Verarbeitung flüssiger Metallschmelzen, umfassend
- einen Tiegel zur Aufnahme eines zu druckenden Metalls,
- eine Heizeinrichtung zum Aufschmelzen des Metalls,
- eine Düse, welche mit dem Tiegel verbunden ist und welche eine Düsenkammer und einen Düsenkanal, welcher sich entlang einer Ausstoßrichtung erstreckt, aufweist, wobei die Düsenkammer und der Düsenkanal ineinander übergehen,
- einen Aktuator, welcher einen Kolben mit einer Kolbenspitze, welche in die Düsenkammer einbringbar ist, aufweist, wobei der Aktuator dazu ausgelegt ist, den Kolben linear vor und zurück zu bewegen, insbesondere in einer Richtung parallel zur Ausstoßrichtung,
- eine Regeleinheit welche den Aktuator regelt,
wobei die Regeleinheit dazu konfiguriert ist, ein Verfahren nach einer der zuvor beschriebenen Ausführungsformen auszuführen.

Der erfindungsgemäße Druckkopf ist dazu vorgesehen, das erfindungsgemäße Verfahren auszuführen. Einige der Elemente oder Bauteile des erfindungsgemäßen Druckkopfes wurden zuvor bereits in Zusammenhang mit dem Verfahren beschrieben. Für diese Elemente oder Bauteile sei auf die vorhergehende Beschreibung verwiesen. Der erfindungsgemäße Druckkopf umfasst weiterhin eine Regeleinheit, welche dazu konfiguriert ist das erfindungsgemäße Verfahren durchzuführen und die anderen Elemente oder Bauteile des Druckkopfes entsprechend anzusteuern. Diese Regeleinheit kann auch als Steuereinheit oder als Electronic Control Unit (ECU) bezeichnet werden. Die Regeleinheit umfasst dabei zumindest eine zentrale Recheneinheit CPU, einen Speicher, sowie Eingabeschnittstellen und Ausgabeschnittstellen zum Daten- und Informationsaustausch mit den Komponenten des Druckkopfes sowie mit einem Bediener des Druckkopfes. Darüber hinaus kann die Regeleinheit weitere Hardwarekomponenten aufweisen, beispielsweise zur Steuerung und Regelung einer Ladungsmenge, welche auf den Aktuator übertragen werden soll. Im Speicher der Regeleinheit sind Werte und Vorgaben in Form von Daten hinterlegt, welche zur Durchführung des erfindungsgemäßen Verfahrens benötigt werden. Darüber hinaus kann die Regeleinheit mit einem Datennetzwerk verbunden sein, um den Austausch von Daten auch über Entfernungen hinweg zu ermöglichen. Ein erfindungsgemäßer Druckkopf ist vorteilhaft, da er aufgrund seiner Eignung zur Durchführung des erfindungsgemäßen Verfahrens die Verwendung kostengünstiger, metallophober Komponenten zur Bildung des Düsenkanals ermöglicht und dabei gleichzeitig reproduzierbare und qualitativ hochwertige Ergebnisse bei der Herstellung von Bauteilen liefert. Durch die Verwendung metallophober Komponenten wird gleichzeitig eine ungewollte Verschmutzung der Düse vermieden. Der erfindungsgemäße Druckkopf ist einfach und robust aufgebaut und ermöglicht basierend auf Hardwarekomponenten oder Bauteilen, welche auch zur Herstellung von Bauteilen verwendet werden, ein zuverlässiges Inbetriebnahmeverfahren für einen neuen, bisher unbenutzten Düsenkanal.

In einer Ausführungsform des Düsenkopfes ist vorgesehen, dass die Düse einen Einsatz umfasst, welcher in den Tiegel eingesetzt ist und die Düsenkammer als Ausnehmung in dem Einsatz ausgeführt ist und die Düse weiterhin eine Düsenplatte aufweist, welche zumindest teilweise eine Begrenzung der Düsenkammer bildet, wobei die Düsenplatte und der Einsatz durch ein Spannelement lösbar miteinander verbunden sind und wobei der Düsenkanal als Ausnehmung ausgeführt ist, welche die Düsenplatte komplett durchdringt. In dieser Ausführungsform ist die Düse mehrteilig aufgebaut. Die Düse umfasst einen Einsatz, welcher die Verbindungsschnittstelle mit dem Tiegel bildet. Der Düsenkanal ist in einer Düsenplatte angeordnet, welche ein zum Einsatz unterschiedliches Bauteil darstellt. Düsenplatte und Einsatz sind durch ein Spannelement miteinander verbunden. Da der Düsenkanal bei der Herstellung von Bauteilen verschleißt und von Zeit zu Zeit daher ausgetauscht werden muss, ist in dieser Ausführungsform der Düsenkanal in einer einfach auszutauschenden Düsenplatte angeordnet. Dies ermöglicht den schnellen und kostengünstigen Tausch des Düsenkanals der Düse. Es sind selbstverständlich auch andere Ausführungsformen der Düse denkbar. Beispielsweise kann kein Einsatz vorgesehen sein und Teile der Düse integral zusammen mit dem Tiegel geformt sein. Auch in dieser Ausführungsform kann der Düsenkanal in einer austauschbaren Düsenplatte angeordnet sein, welche über ein Spannelement mit anderen Komponenten der Düse oder des Tiegels verbunden ist.

Des Weiteren ist vorgesehen, dass die Düsenplatte aus einem metallophoben Werkstoff besteht und/oder die Oberfläche der Düsenplatte und des Düsenkanals metallophob sind. Wie zuvor beschrieben, sind metallophobe Oberflächen an der Düse günstig, da sie ein unerwünschtes Anhaften von Metallschmelze vermeiden oder verhindern. Es ist somit einfach und kostengünstig die gesamte Düsenplatte mit metallophoben Oberflächen zu versehen. Zur Vermeidung von Schwierigkeiten mit der Benetzung des Inneren des Düsenkanals ist das erfindungsgemäße Verfahren vorgesehen.

Geschickter Weise ist vorgesehen, dass die Düsenplatte aus Grafit oder einem Grafitbasiswerkstoff besteht und der Düsenkanal als Bohrung in der Düsenplatte ausgeführt ist. In dieser Ausführungsform besteht die Düsenplatte aus einem Grafitbasiswerkstoff. Ein solcher Werkstoff ist resistent gegen hohe Temperaturen und kann in einfacher Weise geformt werden. Der Düsenkanal wird durch eine zylindrische Ausnehmung in der Düsenplatte gebildet. Der Düsenkanal kann dabei mehrere unterschiedliche Innendurchmesser aufweisen welche durch gerundete oder abgeschrägte Bereiche ineinander übergehen.

Geschickter Weise ist vorgesehen, dass der Aktuator ein Piezoelement umfasst und der Aktuator und/oder die Regeleinheit ein Arbeitsaufnahmeelement umfasst, welches durch einen elektrischen Kondensator gebildet ist, wobei die Regeleinheit dazu konfiguriert ist, das Piezoelement und das Arbeitsaufnahmeelement bedarfsweise elektrisch zueinander parallel zu schalten. In dieser Ausführungsform umfasst der Druckkopf ein Arbeitsaufnahmeelement in Form eines elektrischen Kondensators. Dieser Kondensator ist in der Nähe des Aktuators, welcher ein Piezoelement umfasst, oder in der Nähe oder in der Regeleinheit angeordnet. Das Arbeitsaufnahmeelement ist dazu vorgesehen, im Betriebsmodus einen Teil der von der Regeleinheit bereitgestellten Arbeitsmenge in Form von elektrischer Ladung aufzunehmen. Dazu ist weiterhin eine Schaltung vorgesehen, welche es ermöglicht das Arbeitsaufnahmeelement bei Bedarf, also üblicherweise im Betriebsmodus des Druckkopfes, parallel zum Aktuator zu schalten. Die Schaltung ermöglicht es darüber hinaus, im Verfahren zur Inbetriebnahme des Druckkopfes und des Düsenkanals, die Parallelschaltung von Arbeitsaufnahmeelement und Aktuator aufzuheben, wodurch die gesamte von der Regeleinheit bei bereitgestellte Arbeitsmenge auf den Aktuator übertragen wird. Die Regeleinheit ist dazu ausgebildet, automatisch bei Bedarf eine Parallelschaltung des Arbeitsaufnahmeelementes zum Aktuator durchzuführen.

Merkmale, Wirkungen und Vorteile, welche in Zusammenhang mit dem Verfahren offenbart sind, gelten auch in Zusammenhang mit dem Druckkopf als offenbart. Gleiches gilt in umgekehrter Richtung, Merkmale, Wirkungen und Vorteile welche in Zusammenhang mit dem Druckkopf offenbart sind, gelten auch im Zusammenhang mit dem Verfahren als offenbart.

In den Figuren sind Ausführungsformen der Erfindung schematisch dargestellt. Dabei zeigen
- Fig. 1: eine perspektivische, teilweise geschnittene Ansicht einer Ausführungsform eines Druckkopfes,
- Fig. 2: ein Schaltbild zu einer Ausführungsform einer Verschaltung von einer Regeleinheit, einem Aktuator und einem Arbeitsaufnahmeelement,
- Fig. 3: ein Flussdiagramm einer Ausführungsform des Verfahrens zur Inbetriebnahme eines Druckkopfes.

In den Figuren sind gleiche Elemente mit gleichen Bezugszeichen versehen. Im Allgemeinen gelten die beschriebenen Eigenschaften eines Elementes, welche zu einer Figur beschrieben sind, auch für die anderen Figuren. Richtungsangaben wie oben oder unten beziehen sich auf die beschriebene Figur und sind sinngemäß auf andere Figuren zu übertragen.

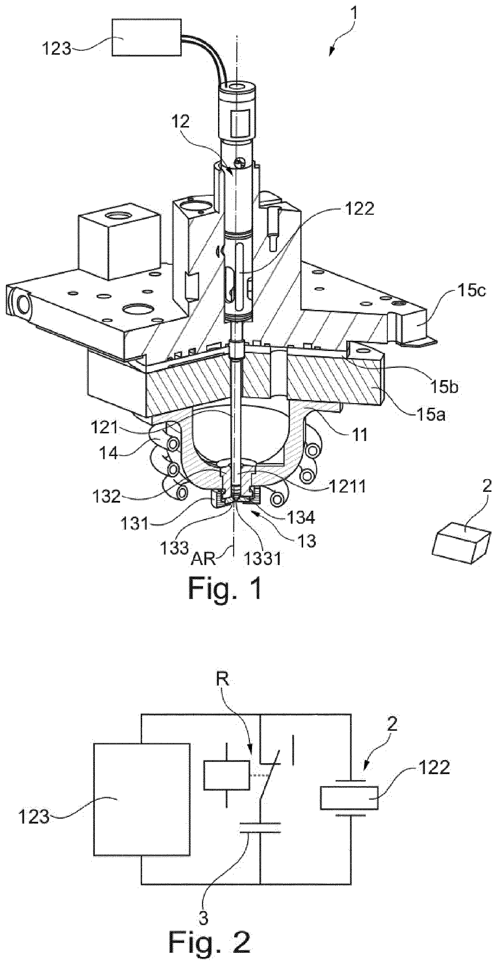

Fig. 1 zeigt eine perspektivische, teilweise geschnittene Ansicht einer Ausführungsform eines Druckkopfes 1. In der Darstellung sind die relevantesten Bauteile des Druckkopfes 1 schematisch dargestellt. Der Druckkopf 1 kann weitere, nicht dargestellte oder beschriebene Bauteile umfassen. Der Druckkopf 1 umfasst einen Tiegel 11 welcher das Metall aufnimmt, welches mithilfe des Druckkopfes 1 gedruckt werden soll. Der Tiegel 11 besteht aus einem hitzeresistenten Material, bevorzugt aus Keramik. An der Außenwand des Tiegels 11 ist eine Heizeinrichtung 14 angeordnet, welche dazu vorgesehen ist, den Tiegel 11 und das darin enthaltene Metall zu erwärmen. In der dargestellten Ausführungsform ist die Heizeinrichtung 14 als Induktionsheizung ausgeführt, welche Wärme durch den Fluss von elektrischem Strom durch widerstandsbehaftete Leiter erzeugt. Alternativ ist es auch möglich, eine Heizeinrichtung 14 einzusetzen, welche auf einem anderen physikalischen Wirkprinzip beruht, beispielsweise eine Widerstandsheizung. Darüber hinaus kann die Heizeinrichtung 14 auch in der Wand oder im Inneren des Tiegels 11 angeordnet sein. Das zu druckende Metall kann dem Tiegel 11 in fester Form zugeführt werden, beispielsweise in der Form von Pellets oder Draht. Alternativ kann dem Tiegel 11 das zu druckende Metall auch in bereits flüssiger Form als Schmelze zugeführt werden. Im untersten Bereich des Tiegels 11 ist die Düse 13 angeordnet, aus welcher im Betriebsmodus des Druckkopfes 1 flüssige Metallschmelze ausgegeben wird, um Bauteile herzustellen. Die Düse 13 umfasst in der dargestellten Ausführungsform einen Einsatz 132, welcher direkt mit dem Tiegel 11 verbunden ist. Im Inneren des Einsatzes 132 befindet sich die Düsenkammer 134. Die Düsenkammer 134 ist hier im Wesentlichen zylindrisch ausgeführt und erstreckt sich entlang der Ausstoßrichtung AR. Die Ausstoßrichtung AR ist diejenige Richtung, in der beim Betrieb des Druckkopfes 1 flüssige Metallschmelze in Tropfenform ausgestoßen wird. Die Düsenkammer 134 wird in Umfangsrichtung durch den Einsatz 132 begrenzt. In einer alternativen Ausführungsform kann eine Düsenkammer 134 auch direkt im Tiegel 11 angeordnet und in Umfangsrichtung von diesem begrenzt werden. In diesem Fall umfasst die Düse keinen Einsatz 132. Die nach unten gewandte Stirnseite der Düsenkammer 134 wird durch eine austauschbare Düsenplatte 133 begrenzt. In der Düsenplatte 133 ist der Düsenkanal 1331 angeordnet, welcher sich entlang der Ausstoßrichtung AR erstreckt. Der Düsenkanal 1331 durchdringt die gesamte Düsenplatte 133. Der Düsenkanal 1331 weist hier einen sich entlang der Ausstoßrichtung AR verändernden Querschnitt auf. Auf der zum Einsatz 132 gewandten Seite ist die Querschnittsfläche des Düsenkanals 1331 größer als auf der dem Einsatz 132 abgewandten Seite. Durch diese Verjüngung des Düsenkanals 1331 entlang der Ausstoßrichtung AR wird eine Tropfenerzeugung beim Drucken begünstigt, da die flüssige Metallschmelze im unteren, engeren Bereich des Düsenkanals 1331 beschleunigt wird. Die Austrittsöffnung des Düsenkanals 1331 auf der unteren Seite ist bevorzugt scharfkantig ausgeführt, wodurch ebenfalls eine Tropfenablösung begünstigt wird. Die Düsenplatte 133 ist hier als zylindrische Scheibe ausgeführt und besteht aus einem Grafitbasiswerkstoff. Das Spannelement 131 verbindet die Düsenplatte 133 und den Einsatz 132 lösbar miteinander. Das Spannelement 131 ist hier als Spannmutter ausgeführt, welche auf ein am Außenumfang des Einsatzes 132 angeordnetes Gewinde aufgeschraubt wird. Alternativ kann das Spannelement 131 auch als Deckel ausgeführt sein, welcher ohne Gewinde auf den Außenumfang des Einsatzes 132 aufgesteckt wird. Die Verbindung zwischen dem Spannelement 131 und dem Einsatz 132 kann auch über sonstige formschlüssige Elemente, beispielsweise nach Art eines Bajonettverschlusses, ausgeführt sein. Im Betrieb des Druckkopfes spannt das Spannelement 131 die Düsenplatte 133 gegen die untere Stirnseite des Einsatzes 132 und dichtet so die Düsenkammer 134 ab. Um die Düsenplatte 133 auszuwechseln, wird das Spannelement 131 entfernt und die Düsenplatte 133 durch eine neue Düsenplatte 133 ersetzt. In der dargestellten Ausführungsform sind sämtliche Oberflächen der Düsenplatte 133 metallophob. Der Einsatz 132 und die Düsenplatte 133 begrenzen zusammen die Düsenkammer 134, welche zum Inneren des Tiegels 11 offen ist. Die Düsenkammer 134 bildet einen Kompressionsraum, in dem flüssige Metallschmelze durch die Kolbenspitze 1211 mit Druck beaufschlagt und dadurch durch den Düsenkanal 1331 aus der Düse 13 ausgestoßen wird.

Der Ausstoß von flüssiger Metallschmelze aus dem Druckkopf 1 wird durch eine Hin- und Herbewegung des Kolbens 121 parallel zur Ausstoßrichtung AR bewirkt. An seinem unteren Ende weist der Kolben 121 eine Kolbenspitze 1211 auf, welche in die Düsenkammer 134 einbringbar ist. An seinem oberen Ende ist der Kolben 121 mit dem Aktuator 12 verbunden. Aufgrund der hohen Temperaturen im Tiegel 11 und in der Düse 13 besteht der Kolben 121 hier aus einem Keramikwerkstoff. Der Außenquerschnitt der Kolbenspitze 1211 ist in ihrem zylindrisch geformten Bereich etwas kleiner als der Innenquerschnitt der Düsenkammer 134. Somit besteht in einem Zustand, in dem die Kolbenspitze 1211 in die Düsenkammer 134 eingebracht ist, in radialer Richtung zur Ausstoßrichtung AR ein Abstand. Dieser Abstand bewirkt, dass flüssige Metallschmelze aus dem Tiegel 11 an der Kolbenspitze 1211 vorbei in die Düsenkammer 134 und in Richtung des Düsenkanals 1331 fließen kann. Bei der Hin- und Herbewegung der Kolbenspitze 1211 wird somit durch den Abstand zwischen Kolbenspitze 1211 und der Wand der Düsenkammer 134 Metallschmelze in Richtung zum Düsenkanal 1331 nachgefördert. Beim Herausziehen der Kolbenspitze 1211 aus der Düsenkammer 134 fließt Metallschmelze vom Tiegel 11 durch den Abstand in Richtung Düsenkammer 134 und Düsenkanal 1331 nach, wobei die Kolbenspitze 1211 bevorzugt stets teilweise innerhalb der Düsenkammer 134 verbleibt. Bei der Bewegung der Kolbenspitze 1211 in Richtung vom Tiegel 11 zum Düsenkanal 1331 fließt ein Teil der Metallschmelze, welcher sich zwischen dem nach unten gewandten Ende der Kolbenspitze 1211 und dem Düsenkanal 1331 befindet, durch den Abstand nach oben zurück in Richtung Tiegel 11. Durch die Größe bzw. Querschnittsfläche des Abstandes kann der Impuls eingestellt werden, welcher durch die sich bewegende Kolbenspitze 1221 auf die Metallschmelze zum Ausstoß aus dem Düsenkanal 1331 übertragen wird. Der Abstand zwischen Kolbenspitze 1211 und der Wand der Düsenkammer 134 kann dabei in Umfangsrichtung um die Kolbenspitze 1211 herum konstant sein. Alternativ kann dieser Abstand in Umfangsrichtung auch unterschiedlich groß sein. Beispielsweise kann die ansonsten zylindrisch geformte Kolbenspitze 1211 in Teilbereichen abgeflacht sein, so dass in diesen Bereichen ein größerer Abstand zwischen Kolbenspitze 1211 und Düsenkammer 134 entsteht. Der Aktuator 12 ist dazu vorgesehen, den Kolben 121 in der Darstellung nach oben und nach unten zu bewegen. Der Aktuator 12 umfasst ein Piezoelement 122, welches sich bei Übertragung einer elektrischen Ladung ausdehnt. Das Piezoelement 122 umfasst mehrere übereinandergestapelt angeordnete Einzelelemente. Der ein Piezoelement 122 umfassende Aktuator 12 kann den Kolben 121 mit einer Amplitude bewegen, welche maximal ca. 90 pm beträgt. Das Piezoelement 122 ist somit in der Lage, die meisten Amplituden zur Durchführung des Verfahrens und zum Drucken von Bauteilen mit dem Druckkopf 1 zu erzeugen. Falls der Verfahrensschritt B1) durchgeführt werden soll, reicht diese maximale Amplitude des Piezoelementes 122 jedoch nicht aus. Es kann somit eine zusätzliche Bewegungsvorrichtung vorgesehen sein, welche den Kolben 121 oder den ganzen Aktuator 12 mit noch größerer Amplitude in Ausstoßrichtung AR vor und zurück bewegen kann. In der dargestellten Ausführungsform kann der Aktuator 12 vom übrigen Druckkopf 1 gelöst werden und in einer Führung per Hand im Bereich von mehreren Millimetern vor und zurück bewegt werden. In diesem Fall wird die Bewegungsvorrichtung durch die Führung zwischen Aktuator 12 und übrigem Druckkopf 1 gebildet. Alternativ kann die Bewegungsvorrichtung auch einen Linearmotor oder ähnliches umfassen, welcher den Aktuator 12 mit dem Kolben 121 oder den Kolben 121 alleine parallel zur Ausstoßrichtung AR mit einer Amplitude bewegen kann, welche im Bereich von mehreren Millimetern liegt.

Der Druckkopf 1 umfasst weiterhin mehrere Gehäuseteile 15a, 15b und 15c, welche den Tiegel 11 und den Aktuator 12 miteinander verbinden. Das Gehäuseteil 15a trägt den Tiegel 11 und stellt gleichzeitig eine thermische Isolierung des im Betrieb erhitzten Tiegels 11 zum Aktuator 12 dar. Das Gehäuseteil 15c nimmt den Aktuator 12 auf und fixiert diesen. Das Gehäuseteil 15c kann darüber hinaus als Führung für den Aktuator 12 dienen, wenn dieser in Verfahrensschritt B1 manuell mit einer größeren Amplitude relativ zum übrigen Druckkopf 1 verschoben wird. Das Gehäuseteil 15c dient gleichzeitig als Flansch, mit dem der Druckkopf 1 an anderen Maschinenkomponenten befestigt werden kann und zur Aufnahme von Sensoren. Das Gehäuseteil 15b dient zur Kühlung des Gehäuseteils 15c und des Aktuators 12. Das Gehäuseteil 15b kann beispielsweise Kanäle aufweisen, durch welche Kühlflüssigkeit, wie beispielsweise Wasser, geführt wird. Auf diese Weise kann Wärme, welche vom Tiegel 11 aus durch das isolierende Gehäuseteil 15a dringt, aus dem Druckkopf 1 abgeführt werden. Im Tiegel 11 herrschen bei Betrieb des Druckkopfes 1 hohe Temperaturen, um Metall in geschmolzener Form zu erhalten. Derart hohe Temperaturen würden den Aktuator 12 schädigen. Daher sind der Tiegel 11 und der Aktuator 12 im Druckkopf 1 thermisch voneinander isoliert angeordnet und es ist bevorzugt eine Kühleinrichtung zwischen beiden Komponenten angeordnet.

Oberhalb des Aktuators 12 ist schematisch eine Regeleinheit 123 dargestellt. Diese Regeleinheit 123 ist mit dem Aktuator 12 verbunden und überträgt elektrische Ladung zum Aktuator 12, um den Kolben 121 zu bewegen. Die Regeleinheit 123 ist auch dazu vorgesehen, das erfindungsgemäße Verfahren zumindest teilweise automatisiert durchzuführen. Dazu kann die Regeleinheit 123 weitere, nicht dargestellte Schnittstellen, beispielsweise zu Sensoren oder anderen Aktoren, der Heizeinrichtung 14 oder ähnlichem aufweisen.

Unterhalb des Druckkopfes 1 ist schematisch eine Ausstoßerkennungsvorrichtung 2 dargestellt. Diese Ausstoßerkennungsvorrichtung 2 ermittelt optisch, ob bei der Durchführung des Verfahrens zur Inbetriebnahme des Druckkopfes 1 flüssige Metallschmelze in Tropfenform aus dem Düsenkanal 1331 ausgestoßen wird oder nicht. Die ermittelten Ergebnisse der Ausstoßerkennungsvorrichtung 2 werden an die Regeleinheit 123 übermittelt und fließen dort in die Regelung des Ablaufs des Verfahrens zur Inbetriebnahme des Druckkopfes 1 ein.

Fig. 2 zeigt ein Schaltbild zu einer Ausführungsform einer Verschaltung von einer Regeleinheit 123, einem Aktuator 12 und einem Arbeitsaufnahmeelement 3. In Fig. 2 ist eine Schaltung dargestellt, welche die von der Regeleinheit 123 zum Aktuator 12 übertragene Arbeitsmenge in Form von elektrischer Ladung beeinflusst. Links ist schematisch die Regeleinheit 123 dargestellt. Die Regeleinheit 123 ist mit dem Piezoelement 122 des Aktuators 12 durch zwei Leiter verbunden. Dabei ist parallel zu dem Piezoelement 122 ein Arbeitsaufnahmeelement 3 in Form eines elektrischen Kondensators geschaltet. Im in Fig. 2 dargestellten Zustand sind das Arbeitsaufnahmeelement 3 und das Piezoelement 122 parallel zueinander geschaltet und beide mit der Regeleinheit 123 verbunden. In diesem Zustand fließt ein Teil einer von der Regeleinheit 123 abgegebenen Arbeitsmenge in Form einer Ladungsmenge in das Piezoelement 122 und ein anderer Teil der abgegebenen Arbeitsmenge fließt in das Arbeitsaufnahmeelement 3. Dementsprechend fließen Teilarbeitsmengen sowohl vom Arbeitsaufnahmeelement 3 als auch vom Piezoelement 122 zurück zur Regeleinheit 123. Die Parallelschaltung des Arbeitsaufnahmeelementes 3 zum Piezoelement 12 kann durch das Relais R unterbrochen werden. Wird die Parallelschaltung des Arbeitsaufnahmeelementes 3 unterbrochen oder aufgehoben, so fließt die gesamte von der Regeleinheit 123 ausgegebene Arbeitsmenge ausschließlich zum Piezoelement 122. Die von der Regeleinheit 123 auf das Piezoelement 122 übertrage Arbeitsmenge korreliert direkt zu der Amplitude, welche durch das Piezoelement 122 erzeugt wird. Somit bewirkt, bei gleicher von der Regeleinheit 123 abgegebene Arbeitsmenge, eine Parallelschaltung des Arbeitsaufnahmeelementes 2 zum Piezoelement 122 eine Reduzierung der Amplitude und/oder der Beschleunigung der Kolbenspitze, die durch das Piezoelement 122 erzeugt wird. Wird die Parallelschaltung von Arbeitsaufnahmeelement 3 und Piezoelement 122 durch das Relais R unterbrochen, so bewirkt dies, bei gleicher von der Regeleinheit 123 abgegebene Arbeitsmenge, eine Erhöhung der Amplitude und/oder der Beschleunigung. Eine derartige Verschaltung der Bauteile ist besonders vorteilhaft, um die Regeleinheit 123 stets in ihrem optimalen Betriebsbereich betreiben zu können und trotzdem unterschiedlich große Amplituden und/oder Beschleunigungen am Piezoelement 122 erzeugen zu können. Zur Durchführung des Verfahrens zur Inbetriebnahme des Druckkopfes 1 werden meist größere Amplituden und eine größere Beschleunigung benötigt als im Betriebsmodus des Druckkopfes. Somit wird während der Inbetriebnahme, insbesondere in Verfahrensschritt C), die Parallelschaltung des Arbeitsaufnahmeelementes 3 unterbrochen. Für den Betriebsmodus wird dann durch das Relais R die Parallelschaltung von Arbeitsaufnahmeelement 3 und Piezoelement 122 hergestellt. Im Betriebsmodus wird von der Regeleinheit 123 eine gleich große oder ähnlich große Arbeitsmenge wie bei der Inbetriebnahme abgegeben, diese Arbeitsmenge wird jedoch auf das Arbeitsaufnahmeelement 3 und das Piezoelement 122 verteilt, so dass das Piezoelement 122 eine geringere Amplitude erzeugt als im Verfahren zur Inbetriebnahme. Auch zur Durchführung von Verfahrensschritt D) kann die Parallelschaltung hergestellt werden, insbesondere für die Ermittlung der Grenzamplitude gegen Ende dieses Verfahrensschrittes. Im Betriebsmodus wird die Kolbenspitze üblicherweise mit Amplituden bewegt, welche größer als die Grenzamplitude sind, beispielsweise um Tropfen mit größerem Durchmesser beim Drucken auszustoßen. Diese Erhöhung der Amplitude im Betriebsmodus kann durch die Regelung der Regeleinheit 123 unter Beibehaltung der Parallelschaltung des Arbeitsaufnahmeelementes 3 vorgenommen werden. Die zeitliche Änderung der von der Regeleinheit 123 abgegebenen Ladungsmenge entspricht der abgegebenen oder aufgenommenen Stromstärke. Durch die Parallelschaltung von Piezoelement 122 und Arbeitsaufnahmeelement 3 wird auch die zwischen Regeleinheit 123 und Piezoelement 122 übertragene Stromstärke beeinflusst. Die Parallelschaltung reduziert dabei die übertragene Stromstärke, wodurch die effektive Beschleunigung der Kolbenspitze 1211 reduziert wird. Im Verfahren zur Inbetriebnahme werden höhere Beschleunigungen der Kolbenspitze 1211 benötigt als im Betriebsmodus. Auch diese Anforderung wird durch die beschriebene Parallelschaltung im Betriebsmodus erfüllt und somit die Qualität der Druckergebnisse verbessert. Für reproduzierbare Druckergebnisse ist es wichtig, dass die Regeleinheit 123 eine reproduzierbar genaue Ladungsmenge und/oder Stromstärke abgibt. Eine genaue Abgabe einer bestimmten Ladungsmenge und/oder Stromstärke ist in einem Betriebsbereich der Regeleinheit 123 optimal und verschlechtert sich, je weiter sich von diesem optimalen Betriebsbereich entfernt wird. Die dargestellte Schaltung begünstigt somit gleichzeitig reproduzierbare Druckergebnisse und ein zuverlässiges Verfahren zur Inbetriebnahme des Druckkopfes 1.

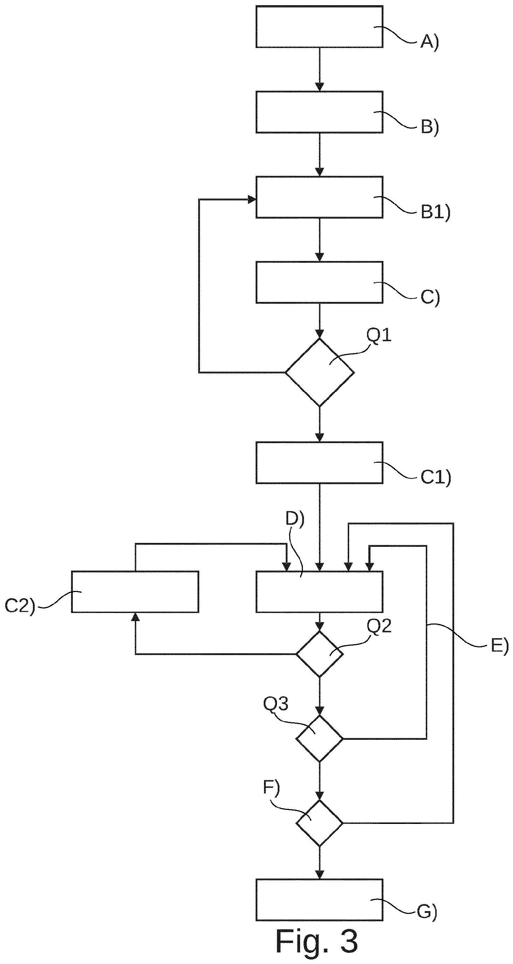

Fig. 3 zeigt ein Flussdiagramm einer Ausführungsform des Verfahrens zur Inbetriebnahme eines Druckkopfes 1. Das dargestellte Diagramm verdeutlicht den Ablauf des Verfahrens zur Inbetriebnahme eines Druckkopfes 1 und zeigt verschiedene Alternativen in dessen Ablauf. Merkmale zu den einzelnen Verfahrensschritten A) bis F) wurden auch schon zuvor beschrieben, somit sei dazu auch auf die vorhergehende Beschreibung verwiesen.

Im ersten Verfahrensschritt A) wird der Druckkopf auf das Verfahren zur Inbetriebnahme vorbereitet. Dazu wird Metall im Inneren des Tiegels 11 aufgeschmolzen und die Kolbenspitze 1211 in die Düsenkammer 134 eingeführt. Bereits in diesem Zustand ist es möglich, dass Metallschmelze in die Düsenkammer 134 und in den Düsenkanal 1331 eindringt.

Im folgenden Verfahrensschritt B) wird ein Überdruck im Inneren des Tiegels 11 erzeugt. Dieser Überdruck unterstützt den Transport oder die Weiterleitung von flüssiger Metallschmelze vom Tiegel 11 in den Düsenkanal 1331.

Im folgenden Verfahrensschritt B1) wird nun die Kolbenspitze 1211 im Inneren der Düsenkammer 134 entlang oder parallel zur Ausstoßrichtung AR vor und zurück bewegt, wobei diese Bewegung mit einer deutlich größeren Amplitude erfolgt als die Bewegungen der Kolbenspitze 1211 in den anderen Verfahrensschritten. Durch diese Bewegung der Kolbenspitze 1211 wird flüssige Metallschmelze in die Düsenkammer 134 und den Düsenkanal 1331 gefördert. Die Frequenz, mit der die Kolbenspitze 1211 im Verfahrensschritt B1) bewegt wird, ist deutlich niedriger als die Frequenzen in den anderen Verfahrensschritten oder im Betriebsmodus. Der Verfahrensschritt B1) ist dabei optional und muss nicht zwingend durchgeführt werden. Allerdings hat es sich herausgestellt, dass eine Bewegung der Kolbenspitze 1211 gemäß Verfahrensschritt B1) mit einer Amplitude im Bereich von mehreren Millimetern das Verfahren zur Inbetriebnahme des Druckkopfes 1 signifikant verbessert bzw. verkürzt.

Im folgenden Verfahrensschritt C) wird nun die Kolbenspitze 1211 mit einer hohen Füllfrequenz FF, welche höher als 1 kHz ist, vor und zurück bewegt. Durch diese hochfrequente Bewegung werden Luftblasen in der Metallschmelze gelöst, wodurch bereits in diesem Schritt große Bereiche der inneren Oberfläche des Düsenkanals 1331 benetzt werden. Verfahrensschritt C) wird aber so lange ausgeführt, bis Metallschmelze aus dem Düsenkanal 1331 ausgestoßen wird (Spray). Bevorzugt wird eine Ausstoßerkennungsvorrichtung 2 für die Erkennung eines solchen Ausstoßes von Metallschmelze verwendet.

In Fig. 3 ist unterhalb von Verfahrensschritt C) die erste Abfrage Q1 zu sehen. Im Verfahrensschritt C) wird die Kolbenspitze 1211 so lange mit Füllfrequenz FF bewegt, bis Metallschmelze ausgestoßen wird. Es gibt jedoch Fälle, in denen keine Metallschmelze ausgestoßen wird, beispielsweise wenn die Benetzung in diesem Verfahrensschritt noch immer unzureichend ist. In einem solchen Fall wird Verfahrensschritt C) über eine bestimmte Verweilzeit hinweg durchgeführt. Nach dem Verstreichen dieser Verweilzeit wird Verfahrensschritt C) beendet und es erfolgt dann die dargestellte Abfrage Q1. Bei dieser Abfrage Q1 wird bestimmt, ob in Verfahrensschritt C) Metallschmelze ausgestoßen wurde oder nicht. Wurde Metallschmelze ausgestoßen, wird das Verfahren mit Verfahrensschritt D) fortgesetzt. Wurde keine Metallschmelze ausgestoßen, so wird der Verfahrensschritt B1) angewendet bzw. wiederholt, bei der die Kolbenspitze langsam, aber mit großer Amplitude im Inneren der Düsenkammer 134 bewegt wird, um zusätzliche Metallschmelze in Richtung Düsenkanal 1331 zu fördern.

Sobald in einem Verfahrensschritt C) Metallschmelze ausgestoßen wurde, kann optional der Verfahrensschritt C1) durchgeführt werden, bei dem der Überdruck im Tiegel 11 relativ zum Verfahrensschritt B) reduziert wird. Durch eine solche Reduktion des Druckes im Tiegel 11 werden bevorzugt Druckbedingungen hergestellt, wie sie auch im Betriebsmodus des Druckkopfes 1 herrschen. Alternativ können die folgenden Verfahrensschritte auch mit dem höheren Überdruck gemäß Verfahrensschritt B) durchgeführt werden.

Im folgenden Verfahrensschritt D) wird nun erstmalig im Verfahren eine Grenzamplitude ermittelt. Diese Grenzamplitude ist ein Wert für eine Amplitude der Kolbenspitze 1211, bei dem gerade noch Metallschmelze aus dem Düsenkanal 1331 ausgestoßen wird. Zur Ermittlung dieser Grenzamplitude wird die Kolbenspitze 1211 mit einer Inbetriebnahmefrequenz IF bewegt, welche deutlich niedriger als die Füllfrequenz FF im Verfahrensschritt C) und niedriger als die Standardfrequenz SF ist, mit welcher die Kolbenspitze 1211 im Betriebsmodus zur Herstellung von Bauteilen bewegt wird. Im Verfahrensschritt D) wird die Kolbenspitze 1211 zunächst mit einer Startamplitude bewegt. Dabei wird festgestellt, ob Metallschmelze ausgestoßen wird. Ist dies der Fall, wird die Startamplitude stufenweise reduziert und jeweils festgestellt, ob bei der reduzierten Amplitude noch Metallschmelze ausgestoßen wird. Durch dieses sukzessive Vorgehen von Reduzierung der Amplitude und Feststellung ob ein Ausstoß vorhanden ist, wird schließlich die Grenzamplitude ermittelt.

In der folgenden Abfrage Q2 wird abgefragt, ob bei dem erstmaligen Durchlauf von Verfahrensschritt D) Metallschmelze ausgestoßen wurde oder nicht. In einem Fall, in dem Metallschmelze ausgestoßen und somit eine Grenzamplitude ermittelt wurde, wird das Verfahren mit der Abfrage Q3 fortgeführt. Wird in der Abfrage Q2 jedoch festgestellt, dass in Verfahrensschritt D) keine Metallschmelze ausgestoßen wurde, wird der Verfahrensschritt C2) durchgeführt. Auch in Verfahrensschritt C2) wird, wie in Verfahrensschritt C), die Kolbenspitze 1211 mit der hohen Füllfrequenz FF vor und zurück bewegt. Verfahrensschritt C2) ist dazu vorgesehen, eventuell sich noch in der Metallschmelze befindliche Luftblasen aufzulösen. Derartige verbliebene Luftblasen können die Ursache dafür sein, dass in Verfahrensschritt D) zuvor selbst bei der Startamplitude keine Metallschmelze ausgestoßen wurde. Der Verfahrensschritt C2) kann dabei mit einem gegenüber Verfahrensschritt B) reduzierten Überdruck im Tiegel 11 durchgeführt werden. Alternativ kann auch der Verfahrensschritt C2) mit einem Überdruck gemäß Verfahrensschritt B) durchgeführt werden. Alternativ kann bei der Abfrage Q2 auch abgefragt werden, ob eine zuvor im Verfahrensschritt D) ermittelte Grenzamplitude größer als eine definierte Grenzamplitude ist. Bei der definierten Grenzamplitude kann es sich um einen Wert handeln, welcher zuvor empirisch als Grenzamplitude ermittelt wurde, bei der ein Tropfenausstoß bei guter Benetzung des Düsenkanals 1331 erfolgt. In einem Fall, in dem die ermittelte Grenzamplitude größer als die definierte Grenzamplitude ist, lässt dies Rückschlüsse auf eine unzureichende Benetzung zu. Somit kann in einem Fall, in dem in der Abfrage Q2 ermittelt wird, dass eine Grenzamplitude größer als eine zuvor definierte Grenzamplitude ist, wie zuvor beschrieben der Verfahrensschritt C1) durchgeführt werden, um die Benetzung des Düsenkanals zu verbessern.

Wurde zuvor in einem Durchlauf von Verfahrensschritt D) ein Ausstoß von Metallschmelze festgestellt und/oder eine Grenzamplitude ermittelt, welche kleiner als die definierte Grenzamplitude ist, wird das Verfahren mit der Abfrage Q3 fortgesetzt. Bei der Abfrage Q3 wird festgestellt, ob eine zuvor bestimmte Anzahl n an Wiederholungen von Verfahrensschritt D) bereits durchgeführt wurde. Ist dies nicht der Fall, das heißt ist die Anzahl der Wiederholungen von Verfahrensschritt D) kleiner als n, wird Verfahrensschritt E) durchgeführt. Verfahrensschritt E) stellt lediglich eine Wiederholung von Verfahrensschritt D) dar, bei der ein weiteres Mal eine Grenzamplitude ermittelt wird. In dem Flussdiagramm in Fig. 3 ist daher der Verfahrensschritt E) ein Pfeil, welcher ausgehend von der Abfrage Q3 zurück zur Verfahrensschritt D) führt und somit eine Wiederholung dieses Verfahrensschrittes symbolisiert. Nach der Wiederholung von Verfahrensschritt D) gemäß Verfahrensschritt E) werden wiederum die beiden Abfragen Q2 und Q3 durchgeführt. Durch jeden Ablauf von Verfahrensschritt E) erhöht sich die Anzahl der Wiederholungen jeweils um eins. Entspricht die tatsächliche Anzahl an Wiederholungen, welche Abfrage Q3 ermittelt wird, schließlich der vorbestimmten Anzahl von Wiederholungen n, wird nach der Abfrage Q3 Verfahrensschritt F) durchgeführt.

In Verfahrensschritt F) wird das Verfahren zur Inbetriebnahme des Druckkopfes 1 beendet. Da es sich bei Verfahrensschritt F) im Wesentlichen um eine Abfrage handelt, ist Verfahrensschritt F) symbolisiert durch das gleiche Rautensymbol dargestellt wie zuvor die Abfragen Q1 bis Q3. Das eigentliche Beenden des Verfahrens, symbolisiert durch das Ergebnis G), wird jedoch nur vorgenommen, wenn die zuvor in Verfahrensschritt D) ermittelten Grenzamplituden bei n Wiederholungen in Folge gleich groß oder kleiner als die definierte Grenzamplitude sind. In diesem Fall kann davon ausgegangen werden, dass der Düsenkanal 1331 reproduzierbar benetzt ist und im anschließenden Betriebsmodus somit eine reproduzierbare und qualitativ hochwertige Bauteilerzeugung möglich ist. Sind die in Verfahrensschritt D) bestimmten Grenzamplituden innerhalb der letzten n Wiederholungen in Folge ganz oder teilweise größer als die definierte Grenzamplitude, so kann davon ausgegangen werden, dass die Benetzung des Düsenkanals 1331 noch unzureichend ist. In diesem Fall wird zunächst eine weitere Wiederholung von Verfahrensschritt E) bzw. D) und den darauf folgenden Verfahrensschritten durchgeführt. Danach wird wieder in Verfahrensschritt F) geprüft, ob sämtliche Grenzamplituden aus den letzten n Wiederholungen in Folge unterhalb der definierten Grenzamplitude liegen. Ist dies bei Erhöhung der Anzahl an tatsächlichen Wiederholungen für die Ermittlung einer Grenzamplitude in Verfahrensschritt D) der Fall, wird das Verfahren in Verfahrensschritt G) endgültig beendet. Sofern innerhalb der letzten n Wiederholungen in Folge Grenzamplituden auftreten, welche größer als die definierte Grenzamplitude sind, wird das Verfahren zur Inbetriebnahme fortgesetzt. Alternativ kann ein Verfahrensschritt F) auch eine andere Bedingung an die zuletzt ermittelten Grenzamplituden abgeprüft werden. Eine solche andere Bedingung kann beispielsweise alternativ oder zusätzlich eine Prüfung sein, ob die zuletzt ermittelten Grenzamplituden eine Streuung aufweisen, welche kleiner oder gleich einer definierten zulässigen Streuung ist. Generell können in Verfahrensschritt F) die unterschiedlichsten Auswertungen und Prüfungen der zuvor ermittelten Grenzamplituden vorgenommen werden. Die Beendigung des Verfahrens zur Inbetriebnahme des Druckkopfes 1 in Verfahrensschritt G) kann somit an unterschiedlichste Bedingungen geknüpft werden. Auf diese Weise ist das Verfahren einfach und flexibel an unterschiedliche Vorgaben oder Anwender anpassbar. In den meisten Fällen kann durch die wiederholte Durchführung der Verfahrensschritte D) und/oder C2) die Benetzung des Düsenkanals 1331 kontinuierlich verbessert werden, solange bis schließlich in Verfahrensschritt F) ein erfolgreicher Abschluss des Inbetriebnahmeverfahrens festgestellt wird. In seltenen Fällen kann es auch vorkommen, dass trotz einer erhöhten Anzahl an Wiederholungen keine Beendigung des Verfahrens gemäß den Verfahrensschritten F) und G) möglich ist. In diesem Fall kann eine manuelle oder optische Untersuchung des Düsenkanals 1331 oder der Düsenkammer 134 zur Problemlösung beitragen.

### Bezugszeichenliste:

- 1: Druckkopf
- 11: Tiegel
- 12: Aktuator
- 121: Kolben
- 122: Piezoelement
- 123: Regeleinheit
- 1211: Kolbenspitze
- 13: Düse
- 131: Spannelement
- 132: Einsatz
- 133: Düsenplatte
- 1331: Düsenkanal
- 134: Düsenkammer
- 14: Heizeinrichtung
- 15a, b, c: Gehäuseteil
- 2: Ausstoßerkennungsvorrichtung
- 3: Arbeitsaufnahmeelement
- R: Relais
- AR: Ausstoßrichtung
- SF: Standardfrequenz
- FF: Füllfrequenz
- A): Verfahrensschritt
- B): Verfahrensschritt
- B1): Verfahrensschritt
- C): Verfahrensschritt
- C1): Verfahrensschritt
- C2): Verfahrensschritt
- D): Verfahrensschritt
- E): Verfahrensschritt
- F): Verfahrensschritt
- G): Verfahrensschritt
- Q1: erste Abfrage
- Q2: zweite Abfrage
- Q3: dritte Abfrage

## Patentansprüche

1. Verfahren zur Inbetriebnahme eines Düsenkanals (1331) eines Druckkopfes (1) für die Verarbeitung flüssiger Metallschmelzen, wobei der Druckkopf (1) folgende Komponenten umfasst:
- einen Tiegel (11) zur Aufnahme eines zu druckenden Metalls,
- eine Heizeinrichtung (14) zum Aufschmelzen des Metalls,
- eine Düse (13), welche mit dem Tiegel (11) verbunden ist und welche eine Düsenkammer (134) und einen Düsenkanal (1331), welcher sich entlang einer Ausstoßrichtung (AR) erstreckt, aufweist, wobei die Düsenkammer (134) und der Düsenkanal (1331) ineinander übergehen,
- einen Aktuator (12), welcher einen Kolben (121) mit einer Kolbenspitze (1211), welche in die Düsenkammer (134) einbringbar ist, aufweist, wobei der Aktuator (12) dazu ausgelegt ist, den Kolben (121) linear vor und zurück zu bewegen, insbesondere in einer Richtung parallel zur Ausstoßrichtung (AR),
wobei das Verfahren folgende Schritte umfasst:
A) Vorbereitung des Druckkopfes (1), wobei im Tiegel (11) Metall zu einer Metallschmelze aufgeschmolzen wird und die Kolbenspitze (1211) in die Düsenkammer (134) eingeführt wird, wobei zwischen der Kolbenspitze (1211) und der Düsenkammer (134) im eingeführten Zustand in radialer Richtung zur Ausstoßrichtung (AR) zumindest bereichsweise ein Abstand besteht,
B) Erzeugung eines Überdrucks im Inneren des Tiegels (11), wodurch gefördert wird, dass Metallschmelze in die Düsenkammer (134) eindringt,
C) Bewegung der Kolbenspitze (1211) in der Düsenkammer (134), wobei die Kolbenspitze (1211) durch den Aktuator (12) mit einer Füllfrequenz (FF) von größer oder gleich 1 kHz vor und zurück bewegt wird, solange, bis Metallschmelze aus dem Düsenkanal (1331) aus dem Druckkopf (1) ausgestoßen wird,
D) Bewegung der Kolbenspitze (1211) in der Düsenkammer (134), wobei die Kolbenspitze (1211) durch den Aktuator (12) vor und zurück bewegt wird, wobei die Bewegung zuerst mit einer Startamplitude durchgeführt wird, bei der Metallschmelze aus dem Düsenkanal (1331) aus dem Druckkopf (1) ausgestoßen wird und im weiteren Verlauf die Amplitude der Bewegung stufenweise reduziert wird und wobei die Bewegung solange mit stufenweiser Reduzierung der Amplitude durchgeführt wird, bis keine Metallschmelze aus dem Düsenkanal (1331) aus dem Druckkopf (1) mehr ausgestoßen wird, wobei die Amplitude, bei der gerade noch Metallschmelze aus dem Düsenkanal (1331) aus dem Druckkopf (1) ausgestoßen wird, als Grenzamplitude definiert wird,
E) Wiederholung von Verfahrensschritt D) n mal hintereinander, wobei bei jeder der n Wiederholungen von Verfahrensschritt D) die Grenzamplitude ermittelt wird,
F) Beendigung des Verfahrens zur Inbetriebnahme eines Düsenkanals (1331) sobald die ermittelten Grenzamplituden bei n + 1 Wiederholungen des Verfahrensschrittes D) alle gleich oder kleiner als eine definierte Grenzamplitude sind.

2. Verfahren nach Anspruch 1, **dadurch gekennzeichnet, dass** zwischen den Verfahrensschritten B) und C) in einem Verfahrensschritt B1) die Kolbenspitze (1211) im Inneren der Düsenkammer (134) vor und zurück bewegt wird, wobei die Amplitude dieser Bewegung zumindest um den Faktor 10 größer als die Startamplitude ist.

3. Verfahren nach Anspruch 2, **dadurch gekennzeichnet, dass** in einem Fall, in dem nach einer vorbestimmten Verweilzeit in Verfahrensschritt C) keine Metallschmelze ausgestoßen wird, der Verfahrensschritt B1) gemäß Anspruch 2 wiederholt wird.

4. Verfahren nach einem der vorhergehenden Ansprüche, **dadurch gekennzeichnet, dass** zwischen den Verfahrensschritten C) und D) ein Verfahrensschritt C1) durchgeführt wird, in dem der Überdruck im Inneren des Tiegels (11) reduziert wird.

5. Verfahren nach Anspruch 4, **dadurch gekennzeichnet, dass** in Verfahrensschritt E) die n Wiederholungen des Verfahrensschrittes D) mit dem nach Verfahrensschritt C1) reduzierten Überdruck im Inneren des Tiegels (11) durchgeführt werden und/oder die Kolbenspitze (1211) bei ihrer Vor- und Zurückbewegung in Verfahrensschritt C) stärker beschleunigt wird als in Verfahrensschritt D) und/oder als in einem Betriebsmodus, in welchem der Druckkopf (1) Metallschmelze tropfenweise ausstößt um ein Bauteil zu formen.

6. Verfahren nach einem der vorhergehenden Ansprüche, **dadurch gekennzeichnet, dass** in einem Fall, in dem in Verfahrensschritt D) bei einer Bewegung der Kolbenspitze (1211) keine Metallschmelze aus dem Düsenkanal (1331) aus dem Druckkopf (1) ausgestoßen wird, ein Verfahrensschritt C2) durchgeführt wird, wobei der Verfahrensschritt C2) dem Verfahrensschritt C) entspricht und nach dem Verfahrensschritt C2) Verfahrensschritt D) wiederholt wird.

7. Verfahren nach einem der vorhergehenden Ansprüche, **dadurch gekennzeichnet, dass** die Bewegung der Kolbenspitze (1211) in Verfahrensschritt D) mit einer Inbetriebnahmefrequenz (IF) durchgeführt wird, welche höchstens 10 % der Füllfrequenz (FF) aus Verfahrensschritt C) beträgt.

8. Verfahren nach einem der vorhergehenden Ansprüche, **dadurch gekennzeichnet, dass** in Verfahrensschritt D) bei der stufenweisen Reduzierung der Amplitude der Bewegung der Kolbenspitze (1211) bei der Startamplitude begonnen wird und anschließend die Amplitude um eine Differenzamplitude schrittweise reduziert wird, wobei nach jeder Subtraktion der Differenzamplitude von der aktuellen Amplitude die Bewegung der Kolbenspitze (1211) über einen Zeitraum oder über eine Anzahl an Bewegungen fortgesetzt wird, bevor die Amplitude ein weiteres Mal um die Differenzamplitude reduziert wird, wobei während des Zeitraums oder während der Anzahl der Bewegungen bei einer konstanten Amplitude ermittelt wird, ob Metallschmelze aus dem Düsenkanal (1331) aus dem Druckkopf (1) ausgestoßen wird.

9. Verfahren nach einem der vorhergehenden Ansprüche, **dadurch gekennzeichnet, dass** nach dem Abschluss von Verfahrensschritt F) der Druckkopf (1) in einen Betriebsmodus überführt wird, in welchem der Druckkopf (1) Metallschmelze tropfenweise ausstößt, um ein Bauteil zu formen, wobei dieses tropfenweise Ausstoßen von Metallschmelze in einer Standardfrequenz (SF) und mit einer Amplitude erfolgt, welche gleich oder größer als die Grenzamplitude ist und/oder das Verfahren, insbesondere Verfahrensschritt D), zumindest teilweise automatisiert durchgeführt wird, wobei eine Regeleinheit (123) die Verfahrensschritte regelt und der Abschluss des Verfahrens von der Regeleinheit (123) festgestellt und eine entsprechende Mitteilung an den Bediener von der Regeleinheit (123) ausgegeben wird.

10. Verfahren nach einem der vorhergehenden Ansprüche, **dadurch gekennzeichnet, dass** die Amplitude der Bewegung der Kolbenspitze (1211) in den Verfahrensschritten C) und D), sowie in dem Betriebsmodus, in welchem der Druckkopf (1) Metallschmelze tropfenweise ausstößt um ein Bauteil zu formen, durch eine von einer Regeleinheit (123) bereitgestellte Arbeitsmenge erzeugt wird, welche im Aktuator (12) wirkt, wobei ein Arbeitsaufnahmeelement (3) vorgesehen ist, welches dazu ausgebildet ist, eine Teilarbeitsmenge aufzunehmen und in dem Betriebsmodus das Arbeitsaufnahmeelement (3) einen Teil der von der Regeleinheit (123) bereitgestellten Arbeitsmenge aufnimmt, wobei im Betriebsmodus nur der übrige Teil der Arbeitsmenge durch den Aktuator (12) umgesetzt wird.

11. Verfahren nach einem der vorhergehenden Ansprüche, **dadurch gekennzeichnet, dass** eine Ausstoßerkennungsvorrichtung (2) verwendet wird, welche ermittelt, ob Metallschmelze aus dem Düsenkanal (1331) aus dem Druckkopf (1) ausgestoßen wird.

12. Verfahren nach einem der vorhergehenden Ansprüche, **dadurch gekennzeichnet, dass** der Aktuator (12) zumindest ein Piezoelement (122) umfasst, welches mit dem Kolben (121) gekoppelt ist, wobei die Hauptausdehnungsrichtung des Piezoelementes (122) parallel zur Längsachse des Kolbens (121) ausgerichtet ist, die Regeleinheit (123) die Ausdehnung des Piezoelementes (122) und damit die Vor- und Zurückbewegung der mit dem Piezoelement (122) gekoppelten Kolbenspitze (1211) regelt, wobei die Zurückbewegung des Kolbens (121) zumindest teilweise durch Federkraft erfolgt, wobei die von der Regeleinheit (123) auf das Piezoelement (122) übertragene Arbeitsmenge, in Form von elektrischer Ladung, in Korrelation zur Amplitude der Kolbenspitze (1211) steht und/oder in Verfahrensschritt D) die Startamplitude durch eine Startladung gebildet wird, welche von der Regeleinheit (123) dem ein Piezoelement (122) aufweisenden Aktuator (12) zugeführt wird und bei der stufenweisen Reduzierung der Amplitude die dem Aktuator (12) zugeführte Ladung stufenweise reduziert wird.

13. Verfahren nach einem der vorhergehenden Ansprüche, **dadurch gekennzeichnet, dass** der Aktuator (12) eine Bewegungsvorrichtung umfasst, welche das Piezoelement (122) mit daran gekoppeltem Kolben (121) in einer Richtung parallel zur Längsrichtung des Kolbens (121) relativ zur Düse (13) in Verfahrensschritt B1) bewegt, wobei die Bewegungsvorrichtung dazu ausgelegt ist, eine Amplitude zu erzeugen, welche zumindest um den Faktor zehn größer als die maximale Amplitude der Ausdehnung des Piezoelementes (122) ist.

14. Verfahren nach einem der vorhergehenden Ansprüche, **dadurch gekennzeichnet, dass** die von der Regeleinheit (123) zur Bewegung der Kolbenspitze (1211) bereitgestellte Arbeitsmenge in Form von elektrischer Ladung bereitgestellt wird, welche in dem Piezoelement (122) des Aktuators (12) zumindest teilweise umgesetzt wird und das Arbeitsaufnahmeelement (3) durch einen elektrischen Kondensator gebildet wird, welcher bedarfsweise parallel zum Piezoelement (122) schaltbar ist, wobei das Arbeitsaufnahmeelement (3) in den Verfahrensschritten C) und D) nicht parallel zum Piezoelement (122) geschaltet wird und wobei das Arbeitsaufnahmeelement (3) im Betriebsmodus parallel zum Piezoelement (122) geschaltet wird, um eine Teilarbeitsmenge in Form von elektrischer Ladung der von der Regeleinheit (123) bereitgestellten Arbeitsmenge aufzunehmen.

15. Druckkopf (1) zur Verarbeitung flüssiger Metallschmelzen, umfassend
- einen Tiegel (11) zur Aufnahme eines zu druckenden Metalls,
- eine Heizeinrichtung (14) zum Aufschmelzen des Metalls,
- eine Düse (13), welche mit dem Tiegel (11) verbunden ist und welche eine Düsenkammer (134) und einen Düsenkanal (1331), welcher sich entlang einer Ausstoßrichtung (AR) erstreckt, aufweist, wobei die Düsenkammer (134) und der Düsenkanal (1331) ineinander übergehen,
- einen Aktuator (12), welcher einen Kolben (121) mit einer Kolbenspitze (1211), welche in die Düsenkammer (134) einbringbar ist, aufweist, wobei der Aktuator (12) dazu ausgelegt ist, den Kolben (121) linear vor und zurück zu bewegen, insbesondere in einer Richtung parallel zur Ausstoßrichtung (AR),
- eine Regeleinheit (123) welche den Aktuator (12) regelt,
wobei die Regeleinheit (123) dazu konfiguriert ist, ein Verfahren nach einem der vorhergehenden Ansprüche auszuführen.

## Claims

1. A method for starting up a nozzle channel (1331) of a print head (1) for processing liquid molten metal, wherein the print head (1) comprises the following components:
- a crucible (11) for accommodating a metal to be printed,
- a heating device (14) for melting the metal,
- a nozzle (13) connected to the crucible (11) and including a nozzle chamber (134) and a nozzle channel (1331) extending along an expulsion direction (AR), wherein the nozzle chamber (134) and the nozzle channel (1331) merge into each other,
- an actuator (12) including a piston (121) having a piston tip (1211) introducible into the nozzle chamber (134), wherein the actuator (12) is configured to linearly move the piston (121) back and forth, particularly in a direction parallel to the expulsion direction (AR),
the method comprising the following steps:
A) preparing the print head (1), wherein metal is melted in the crucible (11) to form a molten metal, and the piston tip (1211) is introduced into the nozzle chamber (134), wherein, in the introduced state, there is a distance, at least in sections, between the piston tip (1211) and the nozzle chamber (134) in the radial direction to the expulsion direction (AR),
B) creating an overpressure inside the crucible (11) which encourages molten metal to enter the nozzle chamber (134),
C) moving the piston tip (1211) in the nozzle chamber (134), wherein the piston tip (1211) is moved back and forth by the actuator (12) at a filling frequency (FF) which is larger than or equal to 1 kHz until molten metal is expelled from the nozzle channel (1331) out of the print head (1),
D) moving the piston tip (1211) in the nozzle chamber (134), wherein the piston tip (1211) is moved back and forth by the actuator (12), wherein the movement is initially performed at a starting amplitude at which the molten metal is expelled from the nozzle channel (1331) out of the print head (1), and subsequently the amplitude of the movement is gradually reduced, and wherein the movement is performed with gradual reduction of the amplitude until molten metal is no longer expelled from the nozzle channel (1331) out of the print head (1), wherein the amplitude at which molten metal is barely expelled from the nozzle channel (1331) out of the print head (1) is defined as the limit amplitude,
E) repeating process step D) n times in succession, wherein, in each of the n repetitions of process step D), the limit amplitude is determined,
F) concluding the method for starting up a nozzle channel (1331) as soon as the determined limit amplitudes are all equal to or smaller than a defined limit amplitude in n + 1 repetitions of process step D).

2. The method according to claim 1, **characterised in that,** in-between process steps B) and C), in a process step B1), the piston tip (1211) is moved back and forth inside the nozzle chamber (134), wherein the amplitude of this movement is larger than the starting amplitude by at least the factor of 10.

3. The method according to claim 2, **characterised in that,** in a case in which no molten metal is expelled after a predetermined dwell time in process step C), the process step B1) according to claim 2 is repeated.

4. The method according to one of the preceding claims, **characterised in that,** in-between process steps C) and D), a process step C1) is performed in which the overpressure inside the crucible (11) is reduced.

5. The method according to claim 4, **characterised in that,** in process step E), the n repetitions of process step D) are performed at the overpressure inside the crucible (11) reduced after process step C1), and/or the piston tip (1211) is accelerated at a higher rate during its back and forth movement in process step C) than in process step D) and/ or than in an operating mode in which the print head (1) expels molten metal in drops to form a component.

6. The method according to one of the preceding claims, **characterised in that,** in a case in which no molten metal is expelled from the nozzle channel (1331) out of the print head (1) while the piston tip (1211) is moving in process step D), a process step C2) is performed, wherein process step C2) corresponds to process step C), and process step D) is repeated after process step C2).

7. The method according to one of the preceding claims, **characterised in that,** in process step D), the movement of the piston tip (1211) is performed at a starting up frequency (IF) which amounts to 10% of the filling frequency (FF) of process step C) at maximum.

8. The method according to one of the preceding claims, **characterised in that,** in process step D), during the gradual reduction of the amplitude of the movement of the piston tip (1211), the starting amplitude is started with, and then the amplitude is progressively reduced by a difference amplitude, wherein, after each subtraction of the difference amplitude from the current amplitude, the movement of the piston tip (1211) is continued for a period of time or for a number of movements before the amplitude is once again reduced by the difference amplitude, wherein, during the period of time or during the number of movements at a constant amplitude, it is determined whether molten metal is expelled from the nozzle channel (1331) out of the print head (1).

9. The method according to one of the preceding claims, **characterised in that,** after the conclusion of process step F), the print head (1) is transferred into an operating mode in which the print head (1) expels molten metal in drops to form a component, wherein this expulsion of molten metal in drops takes place at a standard frequency (SF) and at an amplitude which is equal to or larger than the limit amplitude, and/or
the method, particularly process step D), is performed in an at least partly automated manner, wherein a control unit (123) controls the process steps, and the completion of the method is determined by the control unit (123), and an associated notification is output to the operator of the control unit (123).

10. The method according to one of the preceding claims, **characterised in that** the amplitude of the movement of the piston tip (1211) in process steps C) and D) as well as in the operating mode in which the print head (1) expels molten metal in drops to form a component is generated by a work amount provided by a control unit (123) and acting in the actuator (12), wherein a work receiving element (3) is provided which is designed to receive a partial amount of work, and the work receiving element (3) receives part the work amount provided by the control unit (123) in the operating mode, wherein only the remaining part of the work amount is converted by the actuator (12) in the operating mode.

11. The method according to one of the preceding claims, **characterised in that** an expulsion detection device (2) is used which determines whether molten metal is expelled from the nozzle channel (1331) out of the print head (1).

12. The method according to one of the preceding claims, **characterised in that** the actuator (12) comprises at least one piezo element (122) which is coupled to the piston (121), wherein the main expansion direction of the piezo element (122) is directed parallel to the longitudinal axis of the piston (121), the control unit (123) controls the expansion of the piezo element (122) and thus the back and forth movement of the piston tip (1211) coupled to the piezo element (122), wherein the backward movement of the piston (121) is, at least partly, performed by means of a spring force, wherein the work amount transferred to the piezo element (122) by the control unit (123) in the form of an electric charge is correlated to the amplitude of the piston tip (1211) and/or, in process step D), the starting amplitude is generated by a starting charge which is supplied to the actuator (12) including a piezo element (122) by the control unit (123), and, during the gradual reduction of the amplitude, the charge supplied to the actuator (12) is gradually reduced.

13. The method according to one of the preceding claims, **characterised in that** the actuator (12) comprises a moving device which moves the piezo element (122) including the piston (121) coupled thereto relative to the nozzle (13) in a direction parallel to the longitudinal direction of the piston (121) in process step B1), wherein the moving device is designed to generate an amplitude which is larger than the maximum amplitude of the expansion of the piezo element (122) by at least the factor of ten.

14. The method according to one of the preceding claims, **characterised in that** the work amount provided by the control unit (123) for moving the piston tip (1211) is provided in the form of an electric charge which is at least partly converted in the piezo element (122) of the actuator (12), and the work receiving element (3) is formed by an electric capacitor which is connectable in parallel to the piezo element (122) as required, wherein the work receiving element (3) is not connected in parallel to the piezo element (122) in process steps C) and D), and wherein the work receiving element (3) is connected in parallel to the piezo element (122) in the operating mode to receive a partial amount of work of the work amount provided by the control unit (123) in the form of an electric charge.

15. A print head (1) for processing liquid molten metal, comprising:
- a crucible (11) for accommodating a metal to be printed,
- a heating device (14) for melting the metal,
- a nozzle (13) connected to the crucible (11) and including a nozzle chamber (134) and a nozzle channel (1331) extending along an expulsion direction (AR), wherein the nozzle chamber (134) and the nozzle channel (1331) merge into each other,
- an actuator (12) including a piston (121) having a piston tip (1211) introducible into the nozzle chamber (134), wherein the actuator (12) is configured to linearly move the piston (121) back and forth, particularly in a direction parallel to the expulsion direction (AR),
- a control unit (123) which controls the actuator (12),
wherein the control unit (123) is configured to perform a method according to one of the preceding claims.

## Revendications

1. Procédé de mise en service d'un canal de buse (1331) d'une tête d'impression (1) pour l'usinage de métaux liquides en fusion, la tête d'impression (1) comprenant les composants suivants :
- un creuset (11) destiné à recevoir un métal à imprimer,
- un dispositif de chauffage (14) pour faire fondre le métal,
- une buse (13) qui est connectée au creuset (11) et qui présente une chambre de buse (134) et un canal de buse (1331) qui s'étend le long d'une direction d'éjection (AR), la chambre de buse (134) et le canal de buse (1331) se rejoignant,
- un actionneur (12) comprenant un piston (121) avec une pointe de piston (1211) qui peut être insérée dans la chambre de buse (134), l'actionneur (12) étant adapté pour déplacer le piston (121) linéairement d'avant en arrière, en particulier dans une direction parallèle à la direction d'éjection (AR),
le procédé comprenant les étapes suivantes :
A) Préparation de la tête d'impression (1), du métal étant fondu dans le creuset (11) pour former un métal en fusion, et la pointe de piston (1211) étant introduite dans la chambre de buse (134), une distance existant au moins par zones entre la pointe de piston (1211) et la chambre de buse (134) à l'état introduit radialement par rapport à la direction d'éjection (AR),
B) Création d'une surpression à l'intérieur du creuset (11), ce qui favorise la pénétration du métal en fusion dans la chambre de buse (134),
C) Mouvement de la pointe de piston (1211) dans la chambre de buse (134), la pointe de piston (1211) étant déplacée en avant et en arrière par l'actionneur (12) à une fréquence de remplissage (FF) supérieure ou égale à 1 kHz, jusqu'à ce que le métal fondu soit éjecté de la tête d'impression (1) par le canal de buse (1331),
D) Mouvement de la pointe de piston (1211) dans la chambre de buse (134), la pointe de piston (1211) étant déplacée en avant et en arrière par l'actionneur (12), le mouvement étant d'abord effectué avec une amplitude de départ à laquelle le métal fondu est éjecté du canal de buse (1331) de la tête d'impression (1) et, par la suite, l'amplitude du mouvement étant réduite par étapes, et le mouvement étant effectué avec une réduction par étapes de l'amplitude jusqu'à ce que le métal fondu soit éjecté de la tête d'impression (1), jusqu'à ce que plus aucun métal en fusion ne soit éjecté de la tête d'impression (1) par le canal de buse (1331), l'amplitude à laquelle du métal en fusion est encore juste éjecté de la tête d'impression (1) par le canal de buse (1331) étant définie comme amplitude limite,
E) Répétition de l'étape D) du procédé n fois de suite, l'amplitude limite étant déterminée à chacune des n répétitions de l'étape D) du procédé,
F) Achèvement du procédé de mise en service d'un canal de buse (1331) dès que les amplitudes limites déterminées lors de n + 1 répétitions de l'étape de procédé D) sont toutes égales ou inférieures à une amplitude limite définie.

2. Procédé selon la revendication 1, **caractérisé en ce qu'**entre les étapes de procédé B) et C), dans une étape de procédé B1), la pointe de piston (1211) est déplacée d'avant en arrière à l'intérieur de la chambre de buse (134), l'amplitude de ce mouvement étant supérieure d'au moins un facteur 10 à l'amplitude de départ.

3. Procédé selon la revendication 2, **caractérisé en ce que,** dans le cas où aucun métal fondu n'est éjecté après un temps de séjour prédéterminé à l'étape C) du procédé, l'étape B1) du procédé selon la revendication 2 est répétée.

4. Procédé selon l'une quelconque des revendications précédentes, **caractérisé en ce que,** entre les étapes C) et D) du procédé, on réalise une étape C1) du procédé au cours de laquelle on réduit la surpression à l'intérieur du creuset (11).

5. Procédé selon la revendication 4, **caractérisé en ce que** dans l'étape de procédé E), les n répétitions de l'étape de procédé D) sont effectuées avec la surpression réduite après l'étape de procédé C1) à l'intérieur du creuset (11) et/ou la pointe de piston (1211) est accélérée lors de son mouvement d'avance et de recul dans l'étape de procédé C) plus fortement que dans l'étape de procédé D) et/ou que dans un mode de fonctionnement dans lequel la tête d'impression (1) éjecte du métal en fusion goutte à goutte pour former un composant.

6. Procédé selon l'une quelconque des revendications précédentes, **caractérisé en ce que,** dans le cas où, à l'étape D), aucun métal fondu n'est éjecté de la tête d'impression (1) par le canal de buse (1331) lors d'un mouvement de la pointe de piston (1211), une étape C2) est mise en oeuvre, l'étape C2) correspondant à l'étape C) et l'étape D) étant répétée après l'étape C2).

7. Procédé selon l'une quelconque des revendications précédentes, **caractérisé en ce que** le mouvement de la pointe de piston (1211) à l'étape D) du procédé est effectué à une fréquence de mise en service (IF) qui est au plus égale à 10 % de la fréquence de remplissage (FF) de l'étape C) du procédé.

8. Procédé selon l'une des revendications précédentes, **caractérisé en ce que,** dans l'étape D) du procédé, lors de la réduction par étapes de l'amplitude du mouvement de la pointe de piston (1211), l'on commence à l'amplitude de départ et l'on réduit ensuite l'amplitude par étapes d'une amplitude différentielle, dans lequel, après chaque soustraction de l'amplitude différentielle de l'amplitude actuelle, le mouvement de la pointe de piston (1211) est poursuivi pendant une période ou pendant un nombre de mouvements avant que l'amplitude ne soit réduite une fois de plus de l'amplitude différentielle, dans lequel, pendant la période ou pendant le nombre de mouvements à une amplitude constante, il est déterminé si du métal en fusion est éjecté du canal de buse (1331) hors de la tête d'impression (1).

9. Procédé selon l'une quelconque des revendications précédentes, **caractérisé en ce qu'**à l'issue de l'étape F) du procédé, la tête d'impression (1) est transférée dans un mode de fonctionnement dans lequel la tête d'impression (1) éjecte du métal en fusion goutte à goutte pour former un composant, cette éjection goutte à goutte de métal en fusion s'effectuant à une fréquence standard (SF) et avec une amplitude égale ou supérieure à l'amplitude limite et/ou
le procédé, en particulier l'étape D) du procédé, est exécuté au moins partiellement de manière automatisée, une unité de régulation (123) réglant les étapes du procédé et la fin du procédé étant constatée par l'unité de régulation (123) et un message correspondant étant émis à l'opérateur par l'unité de régulation (123).

10. Procédé selon l'une des revendications précédentes, **caractérisé en ce que** l'amplitude du mouvement de la pointe de piston (1211) dans les étapes de procédé C) et D), ainsi que dans le mode de fonctionnement dans lequel la tête d'impression (1) éjecte du métal fondu goutte à goutte pour former un composant, est générée par une quantité de travail fournie par une unité de régulation (123), qui agit dans l'actionneur (12), un élément de réception de travail (3) étant prévu, lequel est conçu pour recevoir une quantité de travail partielle et, dans le mode de fonctionnement, l'élément de réception de travail (3) recevant une partie de la quantité de travail fournie par l'unité de régulation (123), seule la partie restante de la quantité de travail étant convertie par l'actionneur (12) dans le mode de fonctionnement.

11. Procédé selon l'une quelconque des revendications précédentes, **caractérisé en ce que** l'on utilise un dispositif de détection d'éjection (2) qui détermine si du métal en fusion est éjecté de la tête d'impression (1) par le canal de buse (1331).

12. Procédé selon l'une des revendications précédentes, **caractérisé en ce que** l'actionneur (12) comprend au moins un piézo-élément (122) couplé au piston (121), la direction principale d'extension du piézo-élément (122) étant orientée parallèlement à l'axe longitudinal du piston (121), l'unité de régulation (123) régule l'extension de l'élément piézoélectrique (122) et ainsi le mouvement d'avance et de recul de la pointe de piston (1211) couplée à l'élément piézoélectrique (122), le mouvement de recul du piston (121) s'effectuant au moins partiellement par la force d'un ressort, la quantité de travail transmise par l'unité de régulation (123) à l'élément piézoélectrique (122), sous forme de charge électrique, étant en corrélation avec l'amplitude de la pointe de piston (1211) et/ou, dans l'étape D) du procédé, l'amplitude de départ étant formée par une charge de départ qui est amenée par l'unité de régulation (123) à l'actionneur (12) présentant un élément piézoélectrique (122) et, lors de la réduction progressive de l'amplitude, la charge amenée à l'actionneur (12) étant réduite progressivement.

13. Procédé selon l'une quelconque des revendications précédentes, **caractérisé en ce que** l'actionneur (12) comprend un dispositif de déplacement qui déplace l'élément piézoélectrique (122) avec le piston (121) qui lui est couplé dans une direction parallèle à la direction longitudinale du piston (121) par rapport à la buse (13) dans l'étape B1) du procédé, le dispositif de déplacement étant conçu pour produire une amplitude qui est supérieure d'au moins un facteur dix à l'amplitude maximale de l'extension de l'élément piézoélectrique (122).

14. Procédé selon l'une des revendications précédentes, **caractérisé en ce que** la quantité de travail fournie par l'unité de régulation (123) pour le mouvement de la pointe de piston (1211) est mise à disposition sous forme de charge électrique qui est convertie au moins partiellement dans l'élément piézoélectrique (122) de l'actionneur (12) et l'élément de réception de travail (3) est formé par un condensateur électrique, qui peut être branché en parallèle avec l'élément piézoélectrique (122) en cas de besoin, l'élément d'absorption de travail (3) n'étant pas branché en parallèle avec l'élément piézoélectrique (122) dans les étapes C) et D) du procédé et l'élément d'absorption de travail (3) étant branché en parallèle avec l'élément piézoélectrique (122) en mode de fonctionnement pour absorber une quantité de travail partielle sous forme de charge électrique de la quantité de travail mise à disposition par l'unité de régulation (123).

15. Tête d'impression (1) pour le traitement de métaux liquides en fusion, comprenant
- un creuset (11) destiné à recevoir un métal à imprimer,
- un dispositif de chauffage (14) pour faire fondre le métal,
- une buse (13) qui est connectée au creuset (11) et qui présente une chambre de buse (134) et un canal de buse (1331) qui s'étend le long d'une direction d'éjection (AR), la chambre de buse (134) et le canal de buse (1331) se rejoignant,
- un actionneur (12) comprenant un piston (121) avec une pointe de piston (1211) qui peut être insérée dans la chambre de buse (134), l'actionneur (12) étant adapté pour déplacer le piston (121) linéairement d'avant en arrière, en particulier dans une direction parallèle à la direction d'éjection (AR),
- une unité de régulation (123) qui régule l'actionneur (12),
l'unité de régulation (123) étant configurée pour mettre en oeuvre un procédé selon l'une quelconque des revendications précédentes.
